(19) Europäisches Patentamt
European Patent Office
Office européen des brevets

(11) EP 2 448 047 A1

(12) **EUROPEAN PATENT APPLICATION**
published in accordance with Art. 153(4) EPC

(43) Date of publication:
**02.05.2012 Bulletin 2012/18**

(21) Application number: **10792188.4**

(22) Date of filing: **25.06.2010**

(51) Int Cl.:
*H01M 4/86* (2006.01)      *H01M 8/00* (2006.01)
*H01M 8/02* (2006.01)      *H01M 8/10* (2006.01)

(86) International application number:
**PCT/JP2010/060825**

(87) International publication number:
**WO 2010/150870 (29.12.2010 Gazette 2010/52)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **26.06.2009  JP 2009153012**

(71) Applicant: **Nissan Motor Co., Ltd.**
**Yokohama-shi, Kanagawa 221-0023 (JP)**

(72) Inventors:
• **IDEN, Hiroshi**
**Kanagawa 243-0123 (JP)**

• **OHMA, Atsushi**
**Kanagawa 243-0123 (JP)**
• **ONO, Yoshitaka**
**Kanagawa 243-0123 (JP)**
• **SATOU, Kazuyuki**
**Kanagawa 243-0123 (JP)**
• **SAKAI, Kei**
**Kanagawa 243-0123 (JP)**

(74) Representative: **Grünecker, Kinkeldey, Stockmair & Schwanhäusser**
**Leopoldstrasse 4**
**80802 München (DE)**

(54) **HYDROPHILIC POROUS LAYER FOR FUEL CELLS, GAS DIFFUSION ELECTRODE AND MANUFACTURING METHOD THEREOF, AND MEMBRANE ELECTRODE ASSEMBLY**

(57)      [Summary]
[Object] To provide a hydrophilic porous layer for a fuel cell that improves a sub-zero temperature starting ability of the fuel cell.

[Solving means] A hydrophilic porous layer comprising electrically conductive material - hydrophilic material aggregates each including hydrophilic materials and electrically conductive materials that intimately contact to one another, the hydrophilic materials being mutually connected to one another to form in the hydrophilic materials a continuous transport path for water, the electrically conductive material - hydrophilic material aggregates forming therebetween a transport path for water vapor, which is **characterized in that** when it is above -40°C, a water transport resistance Rwater of the water transport path is larger than a water vapor transport resistance Rgas of the water vapor transport path.

Fig. 2

EP 2 448 047 A1

**Description**

TECHNICAL FIELD:

The present invention relates to a hydrophilic porous layer for a fuel cell, a gas diffusion electrode and a method of producing same and a membrane electrode assembly.

BACKGROUND ART:

Polymer electrolyte fuel cell (PEFC) has such features that the electrolyte is free of dissipation, the control of potential difference between electrodes is easy, the operating temperature is low allowing quick starting of the fuel cell, and a compact and light weight construction is possible. However, in order to cause an electrolyte membrane to keep at a high ion-conductivity, it is necessary to constantly humidify the membrane. In the polymer electrolyte fuel cell (PEFC), the following electrode reaction takes place, that is depicted by chemical formula 1.

[Chem. 1]          Chemical formula 1: Anode: $H_2 \rightarrow 2H^+ + 2e^-$ Cathode: $(1/2) O_2 + 2H + 2e^- \rightarrow H_2O$

As is depicted by the above-mentioned reaction, by supplying the anode side of polymer electrolyte fuel cell with hydrogen and the cathode side of the same with oxygen, electric energy is outputted from the fuel cell. Accordingly, if the water produced at the cathode side is excessive in quantity, flooding phenomena tend to occur, which makes the gas diffusion poor thereby to induce a voltage drop. Accordingly, in the polymer electrolyte fuel cell (PEFC), for achieving a desired cell performance and cell life, a so-called total water control is absolutely necessary that includes a control of water produced at the cathode side, a control of water moving in the membrane as well as a control of humidifying the membrane.

When it is intended to start the polymer electrolyte fuel cell at a temperature below zero, a process of removing water from the interior of the fuel cell beforehand has to be added to the total water control. This is because at a temperature below zero, water staying in the fuel cell is frozen, which disturbs the diffusion of gas thereby causing a poor electric power generation.

In order to solve the important tasks of the above-mentioned total water control, Patent Citation 1 shows one solution. In the solution of this Patent Citation, between an electrode catalyst layer that causes a catalytic reaction of gas supplied thereto from the outside and a gas diffusion layer that evenly diffuses gas supplied thereto from the outside, there are provided a water retaining layer that promotes water retaining and a water repellent layer that promotes water-drainage. Patent Citation 1 discloses an electrode of polymer electrolyte fuel cell, in which each of the water retaining layer and the electrode catalyst layer includes crystalline carbon fiber and the water retaining layer includes water retaining material and electronically conductive material. Patent Citation 1 shows that irrespective of humidifying condition of reacting gas supplied to the fuel cell, the provision of the water retaining layer causes the cell to exhibit a stable and high electricity generating performance without being easily affected by humidity change.

PRIOR ART CITAION:

PATENT CITATION:

Patent Citation 1: Japanese Patent No. 3778506

DISCLOSURE OF INVENTION:

PROBLEMS TO BE SOLVED BY INVENTION:

When considering improvement of transport of water (water vapor, liquid water) toward an anode side in a high current density in the invention of Patent Citation 1, it is fundamentally necessary to provide a hydrophilic porous layer that assures the transport for both liquid water and water vapor. However, since, in the invention of Patent Citation 1, a water repellent material such as crystalline carbon fiber and the like is contained, the transport of liquid water is poor and thus the water transportability is not promoted. Furthermore, in the invention of Patent Citation 1 wherein a base, a water repellent layer and a water retaining layer constitute a unit, provision of the water repellent layer removes a transport pass for liquid water and thus the water transportability is deteriorated.

In order to solve the above-mentioned problems, the present invention provides a MEA constituting element and a method of producing the same, which element is able to promote the water transportability particularly in a low temperature condition and improve a gas transportability. More specifically, the present invention provides a hydrophilic porous layer for a fuel cell and a method of producing the same, which layer comprises an electrolyte and an electrically conductive material and has a construction in which a covering condition of the electrolyte to the electrically conductive material and a structure of the layer are defined. With such invention, evaporation area is assured and undesired voltage drop caused by liquid water, which would occur at the time of operation starting under a low temperature (especially at sub-zero temperature), is suppressed.

MEANS FOR SOLVING THE PROBLEMS:

As a result of eagerly making studies on the above-mentioned problems, the inventors have found that the above-mentioned problems are solved by a hydrophilic porous layer that promotes evaporation of liquid water in the electrolyte by assuring evaporation area and improves transportability of gas and the inventors have completed the present invention.

EFFECTS OF THE INVENTION:

By the hydrophilic porous layer according to the present invention, sufficient evaporation area is assured, and undesired voltage drop caused by liquid water, which would occur at the time of operation starting under a lower temperature (especially at sub-zero temperature), is suppressed.

BRIEF DESCRIPTION OF THE DRAWINGS:

Fig. 1 is a drawing showing a construction of a membrane electrode assembly.
Fig. 2 is a schematic view showing a hydrophilic porous layer of the present invention.
Fig. 3 is a drawing showing a relationship between a relative humidity and an electric double layer capacity in case of the hydrophilic porous layer of the present invention.
Fig. 4 is a schematic drawing showing a condition in which an outer surface of an electrically conductive material is covered with the hydrophilic material in the invention.
Fig. 5A is a schematic drawing showing a relationship between a mass ratio between the hydrophilic material and the electrically conductive material in the invention and a covering ratio of the hydraulic material.
Fig. 5B is a drawing showing a relationship between the mass ratio between the hydrophilic material and the electrically conductive material in the invention and the covering ratio of the hydraulic material.
Fig. 5C is a drawing showing a relationship between a water activity and a water transport resistance ($R_{water}$) in the hydrophilic porous layer of the invention.
Fig. 6 is a drawing showing a relationship between the relative humidity and the electric double layer capacity in case of using various types of electrically conductive materials.
Fig. 7 is a drawing showing pore distribution difference of the hydrophilic porous layer according to types of solvent in the invention.
Fig. 8 is a drawing showing the results of measurement of pore distribution that was applied to the hydrophilic porous layer of Sample A of the embodiment of the invention through a mercury press-in method.
Fig. 9 is a drawing showing a particle diameter of secondary particles of the ink for the hydrophilic porous layer of the Sample A of the embodiment of the invention and its distribution.
Fig. 10 is a photograph of carbon powder used in the Sample A of the embodiment of the invention, that was taken by using a scanning electron microscope.
Fig. 11 is a schematic sectional view showing PEFC including the membrane electrode assembly of the invention.
Fig. 12 shows drawings showing results (A) of an observation of a gas diffusion layer in the embodiment that was made by using EPMA (scanning electron microscope) and results (B) of an analysis of the gas diffusion layer that was made by using EPMA (electron probe micro-analyzer).

MODE FOR CARRYING OUT THE INVENTION:

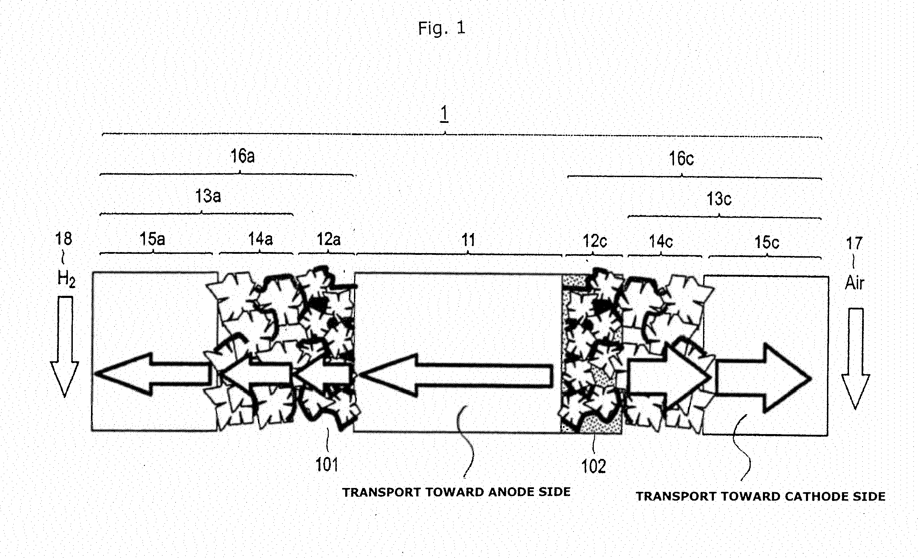

As is seen from Fig. 1, in general, a polymer electrolyte fuel cell has such a construction that an electrolyte membrane electrode assembly 1 (called also as membrane electrode assembly) is held by gas diffusion layers 13 (anode gas diffusion layer and cathode gas diffusion layer) and separators. In the illustrated electrolyte membrane electrode assembly, to one surface of the electrolyte membrane, there is united a catalyst layer (called also as cathode catalyst layer or cathode catalyst electrode) as a cathode member and to the other surface of the electrolyte membrane, there is united another catalyst layer (called also as anode catalyst layer or anode catalyst electrode) as an anode member. The catalyst layer and the gas diffusion layer are called as a diffusion electrode layer. When provided at cathode side, the layer is called as a cathode diffusion electrode layer, and when provided at anode side, the layer is called as an anode diffusion electrode layer. The gas diffusion layer may comprise a micropore layer and a macropore layer (base). It is to be noted that terms used for indicating construction of polymer electrolyte fuel cell described in the specification and the above-described terms have identical definition therebetween.

As is seen from Fig. 1, it has been considered that water (mainly liquid water) produced at the cathode side is transported or discharged through two routes. One of the routes is a route in which after flowing through internal pores formed in the cathode micropore layer 14c and (cathode) macropore layer (cathode base) 15c, water is discharged into a cathode gas flow path 17 as liquid water or water vapor. The other one of the routes is a route in which after being transported toward the anode side through the electrolyte membrane and flowing through internal pores formed in an anode micropore layer 14a and (anode) macropore layer (anode base) 15a while leaving part of produced water kept in the anode catalyst layer 12a, water is discharged into an anode gas flow path 18 as liquid water or water vapor. It has been also considered that the transport of the produced water in the anode or cathode catalyst layer and in the micropore layer is mainly made by the transport of water vapor in the internal pores, the transport of liquid water in the electrolyte and the transport of vaporized liquid water in the internal pores of the electrolyte. Accordingly, the water produced at the cathode side can be easily discharged as compared with the transport toward the anode side since the distance to the cathode gas flow path is relatively short. However, in order to keep the voltage of the membrane electrode assembly (MEA) at a higher level under a frequently changeable operation environment in dry/wet and normal/sub-zero temperature condition, it is considered that only selection of a desired specification of the cathode gas diffusion electrode does not sufficiently control the transport of water from the cathode side to the anode side. Accordingly, an important task, that is a total water control, that includes control of humidification to the membrane, control of water produced in the cathode side and control of water that moves in the membrane has to be accomplished. One method of establishing the task is to promote transport of water toward the anode side.

One embodiment of the present invention is a layer that comprises aggregates of electrically conductive material and hydrophilic material in which the electrically conductive material and hydrophilic material of each aggregate closely contact to one another and the hydrophilic materials mutually connect to one another to form in the hydrophilic material a continuous transport path for water (liquid water) and in which the aggregates of electrically conductive material and hydrophilic material define therebetween a transport path for water vapor. The layer is a hydrophilic porous layer that is **characterized in that** at a temperature of -40°C (estimated lowest temperature), a water transport resistance $R_{water}$ of the above-mentioned water transport path is larger than a water vapor transport resistance $R_{gas}$ of the above-mentioned water vapor transport path.

If, for example, the hydrophilic porous layer of the invention is applied to a fuel cell, as is mentioned hereinabove, water flowing in the fuel cell catalyst layer has two modes, one being a mode in which the water flows in the form of water vapor (vapor phase) and the other being a mode in which the water flows in the form of liquid water (liquid phase). Usually, at ordinary temperatures, it is said that water transport in the vapor phase is mainly carried out. However, at a lower temperature, especially, at sub-zero temperature, it is said that water transport in the liquid phase largely contributes to the transport. However, in ordinary fuel cells, the transport paths for liquid phase water are not sufficiently provided, and thus, it often happens that smoothed water transport throughout the system is prevented. By providing a hydrophilic porous layer of the invention as a catalyst layer and a gas diffusion electrode, water transportability in a lower temperature condition can be increased (that is, continuity of liquid phase transport paths is assured).

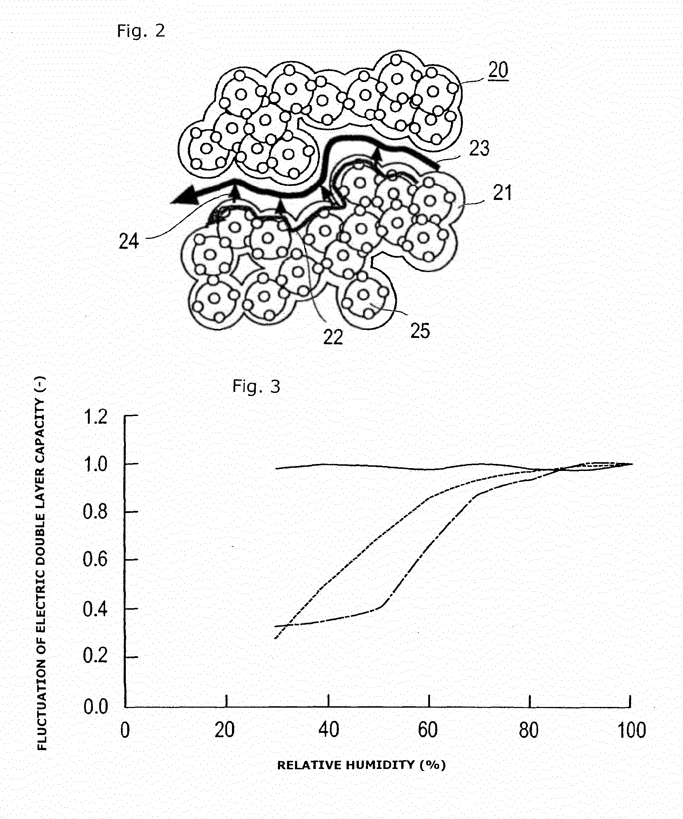

That is, as is seen from Fig. 2, by mixing or closely contacting hydrophilic material 21 and electrically conductive material 25, the hydrophilic materials 21 are mutually connected or united to form in the interior of the hydrophilic material 21 a continuous water transport path (water transport path that is opened) 22. At the same time, there are produced aggregates 20 of hydrophilic material-electrically conductive material (which will be referred to as hydrophilic material-conductive material aggregates 20 hereinafter). It is assumed that when plurality of hydrophilic material-conductive material aggregates 20 are collected, pores are formed due to a stereoscopic structure produced by the hydrophilic material-conductive material aggregates 20, and a water vapor transport path 23 is formed between mutually adjacent hydrophilic material-conductive material aggregates 20. Accordingly, if a transport resistance of liquid phase is higher than that of vapor phase, the liquid water moving in the transport path 22 in the hydrophilic material is allowed to be exposed to the outside air for longer time. Accordingly, in the hydrophilic porous layer of the invention, as is indicated by 24 in Fig. 2 that shows routes from liquid water to water vapor, the liquid water can be quickly vaporized permitting water transport in the vapor phase. As a result, it can be considered that the water transportability of the entire system is increased.

Although Fig. 2 shows a type in which outer surface of the electrically conductive material is applied with a catalyst component, other types may be used which are for example a type in which only the electrically conductive material is used and a type in which the electrically conductive material and the electrically conductive material applied with the catalyst component are mixed.

Furthermore, in a sub-zero temperature condition, movement from the liquid phase to the gaseous phase is not easily made, and thus, movement from the liquid phase to the gaseous phase is a rate determining movement. Furthermore, at the same time, depending on the range of temperature, it tends to occur that the transport in the liquid phase and the transport in the gaseous phase are reversed. Accordingly, in case of starting the fuel cell, promotion of the water transport in gaseous phase that determines the rate determining movement brings about a speedy transport of water (viz., liquid water + water vapor) as a whole, and thus, freeze of produced water can be suppressed.

A water transport resistance $R_{water}$ and a water vapor transport resistance $R_{gas}$, which will be described in the description can be defined from the following equations.

(transport resistance of water vapor = $R_{gas}$)

[Eq. 1]

$$J_{gas} = -D_{gas}^{eff} \frac{dc}{dx} = -D_{gas}^{eff} \frac{P_{sat}}{RT} \cdot \frac{da}{dx}$$

$$-D_{gas}^{eff} \frac{P_{sat}}{RT} = \frac{1}{R_{gas}}$$

wherein:

c: concentration of water vapor
a: activity of water
x: transportation distance
R: gas constant
T: temperature
$J_{gas}$: water vapor flux
$P_{sat}$: saturated vapor pressure

Considering molecular diffusion and Knudsen diffusion in case of water vapor transport in a pore with a certain diameter, Diffusion coefficient $D_{gas}^{eff}$ in an environment having therein the diffusions intermixed is determined in the following manner.

[Eq. 2]

$$D_t = \frac{1 + K_n}{\dfrac{1}{D_m} + \dfrac{K_n}{D_k}}$$

wherein:

$D_t$: diffusion efficiency of pore diameter
$K_n$: Knudsen number
R: gas constant
$D_m$: molecular diffusion
$D_k$: Knudsen diffusion

Furthermore, considering that in the interior of the hydrophilic porous layer of the invention, pores of various diameters are continuously connected, it is possible to derive a total diffusion efficiency by expressing the diffusion efficiency of each pore (blank pore) by Dti and expressing each pore diameter by $r_i$.

[Eq. 3]

$$D_A = \frac{Z(r_1) + Z(r_2) + \ldots + Z(r_n)}{\frac{Z(r_1)}{D_{t1}} + \frac{Z(r_1)}{D_{t2}} + \ldots + \frac{Z(r_n)}{D_{tn}}} = \frac{\sum_1^n Z(r_i)}{\sum_1^n \frac{Z(r_i)}{D_{ti}}}$$

Furthermore, the effective diffusion coefficient $D^{eff}_{gas}$ is defined in the following manner.

[Eq. 4]

$$D^{eff}_{gas} = D_A \times \varepsilon$$

wherein:

$\varepsilon$ : porosity

(transport resistance of water = $R_{water}$)

For comparison with the transport resistance in gaseous phase, calculation of the transport resistance of water should be made under the condition that the transport is made using an activity difference as a driving force. For example, if a material such as Nafion (registered trademark) is used as the hydrophilic material, the diffusion coefficient is measured using a contained-water amount ($\lambda$) gradient of one unit of sulfonic acid group as the driving force. For practically using this measuring method, the following conversion is needed.

[Eq. 5]

$$J_{water} = -\frac{\rho}{M} D^{eff}_{water} \frac{d\lambda}{dx} = -\frac{\rho}{M} D^{eff}_{water} \frac{d\lambda}{da} \cdot \frac{da}{dx}$$

$$-\frac{\rho}{M} D^{eff}_{water} \frac{d\lambda}{da} = \frac{1}{R_{water}}$$

wherein:

$J_{water}$: water vapor flux
M: molecular weight
$\rho$: density
$\lambda$: contained water amount for one unit of sulfonic acid group
a: activity of water
x: transportation distant

Furthermore, with the aid of a water diffusion coefficient ($D_{water}$) of the hydrophilic material bulk and a volume rate of the hydrophilic material in the hydrophilic porous layer of the invention, the effective diffusion coefficient of the liquid water in the hydrophilic porous layer of the invention is represented by the following equation.
$$[\text{Eq. } 6]$$

$$D_{\text{water}}^{\text{eff}} = D_{\text{water}} \times \varepsilon_{\text{ion}}^{1.5}$$

wherein:

$\varepsilon_{\text{ion}}$: volume rate = filling rate

In the invention, judgment as to whether transport paths connected continuously that form paths for water (liquid water) are formed or not is carried out by checking a relationship between relative humidity and electric double layer capacity. Fig. 3 depicts the results of experiment of the hydrophilic porous layer of the invention showing the relationship between the relative humidity and electric double layer capacity. As is seen from Fig. 3, when, as is indicated by the solid line, the relationship between the relative humidity and electric double layer capacity is so made that the electric double layer capacity keeps constant even when the relative humidity changes, it is considered that the electric double layer capacity is provided or formed by only a boundary surface between the electrically conductive material and the ion conductive hydrophilic material. With this, it is regarded that the transport path for water (liquid water) is continuously connected.

While, when the relative humidity and electric double layer capacity have such a relationship as indicated by a dot-dash line of Fig. 3, water adsorbed to the electrically conductive material, water adsorbed to outer surface of the electrically conductive material or an electric double layer formed between the boundary surface between the electrically conductive material and the hydrophilic material is measured or conceivable under a high humidity condition. While, under a low humidity condition, only the boundary surface between the hydrophilic material and electrically conductive material makes the contribution. While, when a transport path for water (liquid water), which is to be defined by the hydrophilic material does not constitute a continuously connected path, the ion conduction path becomes cut with lowering of the relative humidity, as is indicated by a broken line of Fig. 3. Due to occurring of this cut, formation of the electric double layer fails.

With the reasons as mentioned hereinabove, in the invention, an electric double layer capacity at a relative humidity of 40% and that at a relative humidity of 50% are compared, and if the rate of change is equal to or smaller than 10%, it is regarded that continuous water (liquid water) transport paths (viz., water transport paths that are continuously connected) are formed.

Although no limitation is applied to the thickness of the hydrophilic porous layer of the invention, thickness of 2 to 40 $\mu$m is preferable, and thickness of 2 to 25 $\mu$m is more preferable. If the thickness of the hydrophilic porous layer is within the above-mentioned range, both water transportability and gas diffusing capability are assured, and thus, the range is preferable. With usage of a mercury press-in method by which a pore distribution is measured, volume of pores (micropore) provided in the layer is measured, and porosity is derived as a percentage of the volume of pores relative to the volume of the layer.

A porosity of an entire construction of the hydrophilic porous layer in the invention is not particularly limited, but 30 to 80% is preferable for it, and 40 to 70% is more preferable for it. When the porosity is within the above-mentioned range, the water transportability and gas diffusibility are assured and thus such range is preferable. The porosity can be derived by measuring the volume of pores (fine pores) placed in the layer by means of a fine pore distribution measurement using a mercury press-in method and calculating the ratio of the volume relative to a volume of the layer.

The hydrophilic porous layer of the invention is a layer that comprises hydrophilic material and electrically conductive material. If desired, the electrically conductive material may be applied with a catalyst component.

Regarding the mass of the hydrophilic material of the hydrophilic porous layer of the invention, the hydrophilic material is preferably 50 to 150 parts by mass, more preferably 70 to 130 parts by mass relative to 100 parts by mass of the electrically conductive material.

If the hydrophilic material of the hydrophilic porous layer of the invention is smaller than 50 parts by mass relative to 100 parts by mass of the electrically conductive material, the mass ratio of the hydrophilic material relative to the electrically conductive material becomes low, so that it tends to occur that, due to intimate contact between mutually adjacent hydrophilic materials, formation or production of a continuous water (liquid water) transport path fails. While, if the hydrophilic material exceeds 150 parts by mass, it tends to occur that a water vapor transport path is not sufficiently provided and thus the water transportability of the entire system of the layer is lowered.

If possible, the hydrophilic porous layer of the invention may contain other material other than the electrically conductive material and binder. Preferably, the content of both the electrically conductive material and hydrophilic material is equal to or greater than 60% by volume, more preferably, equal to or greater than 80% by volume. More preferably, the hydrophilic porous layer comprises electrically conductive material and ion conductive material.

In case wherein the electrically conductive material of the hydrophilic porous layer of the invention is applied with a catalyst component thereby to use it as an electrode catalyst, the content of the catalyst component in the electrode catalyst is preferably 10 to 80 mass % and more preferably 30 to 70 mass %. If the content of the catalyst component in the electrode catalyst is smaller than 10 mass %, it tends to occur that due to reduction of outer surface of the catalyst, a sufficient power output is not obtained. While, if the content of the catalyst component exceeds 80% mass %, it tends to occur that due to exceeded agglomeration of catalyst particles, the outer surface of the catalyst relative to the amount of catalyst applied to the electrically conductive material is lowered.

As is mentioned hereinabove, by setting the covering area of the hydrophilic material relative to the electrically conductive material to a given range, it is possible to form a water vapor transport path as well as a liquid water vapor transport path, and thus it is possible to increase the transportability of produced water. Accordingly, in case wherein the hydrophilic porous layer of the invention is practically applied to a membrane electrode assembly (MEA), a sub-zero temperature starting can be carried out in a high current density operation. More specifically, in sub-zero temperature starting, undesired water freezing is suppressed due to increase of the water transportability, and thus, damage of a fuel cell caused by the water freezing and undesired voltage drop caused by lowering in gas diffusing capability are suppressed.

In the following, various components that constitute the hydrophilic porous layer of the invention will be described.

(Electrically conductive material)

Examples of electrically conductive material used in the invention are natural graphite, artificial graphite produced from organic compounds such as polyacrylonitrile, phenol resin, furan resin and the like, carbon materials such as activated carbon, carbon black (oil furnace black, furnace black, channel black, Ketchen Black, lamp black, thermal black, acetylene black and the like) and metal oxides such as oxides of Sn, Ti and the like. Carbon material is preferable. More specifically, examples of the electrically conductive material are Vulcan (registered trademark) XC-72R produced by Cabot Corporation, Vulcan (registered trademark) P, Black Pearls (registered trademark) 1100, Black Pearls (registered trademark) 1300, Black Pearls (registered trademark) 2000, Regal (registered trademark) 400, Ketchen Black (registered trademark) EC produced by Ketchen Black International Corporation, Ketchen Black (registered trademark) EC600JD, and #3150 and #3250 produced by Mitsubishi Chemical Corporation. An example of acetylene black is Denka Black (registered trademark) produced by DENKI KAGAKU KOGYO KABUSHIKIKAISHA.

The electrically conductive material used in the invention may be particulate, granular, needle-shaped, tabular, irregular-shaped particulate, fibrous, tubular, conical, megaphone-shaped, etc.,. The electrically conductive material may be a material to which aftertreatment has been applied. Furthermore, the electrically conductive material may be added with metallic particles of Au, Pt, Ti, Cu, Al or stainless steel, particles of stannous oxide, particles of indium tin oxide or electron conductive high polymers, such as polyaniline, fullerene or the like.

It is preferable that the mean particle diameter (grain size) of the primary particles used in the invention is equal to or smaller than 60nm, and it is more preferable that the mean particle diameter is 5 to 50nm and most preferable that the mean particle diameter is 5 to 40nm.

When the mean particle diameter of the primary particles is equal to or smaller than 60nm, larger surface area can be obtained with a smaller amount of the material. As a result, the thickness of the hydrophilic porous layer proper of the invention can be reduced and thus the water transport resistance of the entire system can be reduced.

It is to be noted that the primary particle explained in the specification is directed to each of particles that form a flocculated cluster of the particles. For example, the carbon material such as the above-mentioned carbon black is of a type that is flocculated.

It is to be noted that the particle diameter mentioned in the specification is the largest one "L" of the distances each being a distance between any two points on a contour of active material particle. As the mean particle diameter, the value of the mean particle diameter of the particles that are shown in several tens of viewing areas provided by a scanning electron microscope (SEM) or transmission electron microscope (TEM) is used.

Preferably, the electrically conductive material used in the invention is a material whose outer surface has been subjected to acid treatment.

Due to the acid treatment, the hydrophilic site of the electrically conductive material is increased and thus the hydrophilic porous layer of the invention can have a larger water holding capacity thereby to promote the water discharge from the catalyst layer.

Examples of the method of applying acid treatment to the outer surface of the electrically conductive material of the invention are a method in which the electrically conductive material is immersed in a known acid solution provided by inorganic acid such as hydrochloric acid, sulfuric acid, nitric acid, nitrous acid or sulfurous phosphoric acid, a method in which the electrically conductive material is immersed in acid solution provided by organic acid such as acetic acid, formic acid or hydrofluoric acid and a method in which the electrically conductive material is immersed in mixed acid of the above-mentioned acids and a method in which the acid solution is sprayed onto the electrically conductive material.

The solvent used for the above-mentioned acid solution is mainly water. However, if it is desired to facilitate dispersion of the electrically conductive material in the solution, the solution may contain polarized organic solvent such as acetone, alcohol or the like. The concentration of the above-mentioned acid solution is not limited so long as it provides acid.

Regarding the above-mentioned immersing method, the time for which the immersing is kept for providing the outer surface of the electrically conductive material of the invention with the hydrophilic site is not particularly limited. That is, the immersing time is suitably selected in accordance with "pH" of the acid solution, the size of the electrically conductive material, etc.,. One example is to immerse the electrically conductive material in a given amount of acid solution for 1 to 48 hours. If desired, after having the acid treatment, acid may be removed from the electrically conductive material by making heat treatment, firing, cleaning, drying and so on. In this case, the temperature set for the heat treatment and firing is preferably 20 to 300°C.

(Hydrophilic material)

The hydrophilic material used in the invention is not particularly limited so long as it is ion-conductive and able to bond the electrically conductive material. Examples of the hydrophilic material are high polymers, such as polyacrylamide, water-based urethane resin and silicone resin and polyelectrolyte. Most preferable one is polyelectrolyte. By denaturing the polyelectrolyte to the hydrophilic material, the polyelectrolyte can be stably arranged in case wherein the hydrophilic porous layer is arranged to adjoin a MEA constituent element (electrolyte membrane or catalyst layer) that contains identical hydrophilic material and ion-conductive material, so that the water transport resistance in a clearance defined between the electrically conductive material and each of the catalyst layer and electrolyte membrane can be reduced. As a result, the water transportability in the clearance between the electrically conductive material and each of the catalyst layer and the electrolyte membrane is improved, and thus, state of equilibrium is quickly achieved. In case wherein the hydrophilic material is a polyelectrolyte, the polyelectrolyte may be the same as or different from a polyelectrolyte used in the catalyst layer or the electrolyte membrane. In case of producing MEA that includes hydrophilic porous layer, it is possible to carry out common usage of materials, and thus, it is possible to effect a labor saving.

The hydrophilic material suitably used in the invention is not particularly limited. Specifically, the hydrophilic material is roughly classified into fluorine-based electrolyte in which fluorine atom is contained in the whole or part of polymer frame and hydrocarbon-based electrolyte in which no fluorine atom is contained in polymer frame.

Preferable examples of the fluorine-based electrolyte include specifically perfluorocarbon sulfonic acid based polymer such as Nafion (registered trade name, produced by Dupont), Aciplex (trade name, produced by Asahi Kasei Chemicals Corporation), Flemion (registered trade name, produced by Asahi Glass Co., Ltd.) and the like, polytrifluorostyrene sulfonic acid based polymer, perfluorocarbon phosphonic acid based polymer, trifluorostyrene sulfonic acid based polymer, ethylenetetrafluoroethylene-g-styrene sulfonic acid based polymer, ethylene-trarafluoroethylene copolymer, polyvinylidene fluoride-perfluorocarbon sulfonic acid based polymer, and the like. The fluorine-based electrolyte is excellent in durability and mechanical strength.

Preferable examples of the above-mentioned hydrocarbon-based electrolyte include preferably polyphosphonic acid, polyaryletherketone sulfonic acid, polybenzimidazoleaklyl sulfonic acid, polybenzimidazolealkyl phosphonic acid, polystyrene sulfonic acid, polyetheretherketone sulfonic acid, polyphenyl sulfonic acid, and the like. These hydrophilic materials may be used single or in combination of two or more kinds.

Moving speed of water is important in the hydrophilic porous layer, and therefore EW of the hydrophilic material is preferably low. EW is preferably not higher than 1200 g/eq., more preferably not higher than 1000 g/eq., and most preferably not higher than 700 g/eq. With such a range, diffusion of liquid water can be promoted thereby providing the hydrophilic porous layer which is compatible in a sub-zero temperature starting ability and a high current density operation at normal temperature. The lower limit of EW is not particularly limited, but it is preferable not lower than 500 g/eq. It is to be noted that EW (Equivalent Weight) represents an ion exchange group equivalent mass.

The hydrophilic material used in the invention covers at least part of the above-mentioned electrically conductive material and a cover area $S_{ion}$ of the hydrophilic material to the electrically electrically conductive material is represented by the following equation.

[Eq. 7]

$$S_{ion} = S_{BET} \times \theta_{ion}$$

(In the above equation, $S_{BET}$ is BET nitrogen specific surface area of the electrically conductive material, and $\theta_{ion}$ is a covering ratio of the hydrophilic material.)

The covering surface $S_{ion}$ of the hydrophilic material to a unit mass of the electrically conductive material is preferably not smaller than 200m$^2$/g, and more preferably, not smaller than 200m$^2$/g and not larger than 1600m$^2$/g.

With the above, the boundary surface between hydrophilic material and vapor phase is increased thereby to promote the phase change from liquid phase to vapor phase, and as a result of promotion of the phase change to vapor phase, the water transportability throughout the system is improved.

When the cover area $S_{ion}$ of the hydrophilic material is not smaller than 200m$^2$/g and not larger than 1600m$^2$/g, discharge of liquid water can be promoted due to increase in vaporizing area.

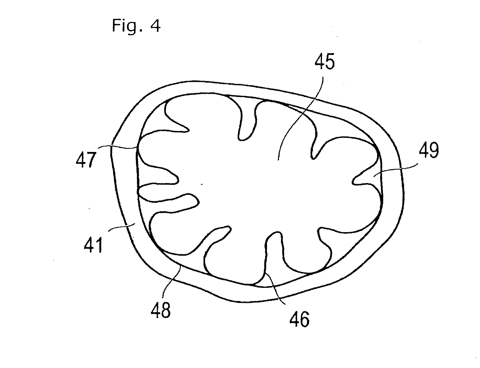

Fig. 4 is a schematic representation of an electrically conductive material 45 at least part of which is covered with a hydrophilic material 41, which is according to the present invention. As is shown in Fig. 4, a BET nitrogen specific surface area ($S_{BET}$) corresponds to the part of the broken line. Accordingly, a covering area ($S_{ion}$) 47 of the hydrophilic material, which is an area (surface area) of the hydrophilic material that covers the electrically conductive material, corresponds to the part where the broken line 46 and a dot-dash line 48 that indicates an inside surface area of the hydrophilic material are overlapped. That is, the covering area (Sion) 47 of the hydrophilic material, which the area of the hydrophilic material that covers the electrically conductive material, is an area of the part where the electrically conductive material 45 and the hydrophilic material 41 contact to each other.

The covering ratio $\theta_{ion}$ of the hydrophilic material according to the invention is represented by a ratio ($\theta_{ion}$ = Cdl at 30% RH/Cdl at 100% RH) between an electric double layer capacity ($C_{dl}$) at a relative humidity of 30% and that at a relative humidity of 100%. The reason why the ratio between the relative humidity of 30% and the relative humidity of 100% is adopted is as follows. Under a high humidity condition, an electric double layer formed at an interface between the electrically conductive material and water adsorbed to the surface of the electrically conductive material or an electric double layer formed at an interface between the electrically conductive material and the hydrophilic material is measured. While, under a low humidity condition, an electric double layer formed at the interface between the electrically conductive material and the hydrophilic material is mainly measured. When the relative humidity is equal to or lower than 30%, the electric double layer capacity shows a constant level. Accordingly, in accordance with the present invention, the relative humidity of 30% and that of 100% are made as representing points for the low humidity condition and high humidity condition and by obtaining a ratio between the electric double layer capacity at one representing point and that at the other representing point, an index of knowing how large that the electrically conductive material is covered with the hydrophilic material is obtained.

In the present invention, a value measured by a method mentioned below is employed as the electric double layer capacity.

First, the hydrophilic porous layer containing no catalyst component and the catalyst layer were respectively disposed at the different surfaces of an electrolyte membrane thereby producing the membrane electrode assembly. The assembly were interposed at its opposite surfaces between a pair of gas diffusion layers, further between carbon separators, and further between gold-plated collector plates thereby obtaining a cell similar to a usual fuel cell. In a condition wherein humidity-controlled hydrogen gas was supplied to the catalyst layer while humidity-controlled nitrogen gas was supplied to the hydrophilic porous layer, the electric potential of the hydrophilic porous layer was scanned 5 to 10 times within a range of 0.2 to 0.6 V relative to a reference electrode using the catalyst layers respectively as the reference electrode and an opposite electrode. These scans were made at a scanning speed of 50 mV/s. An obtained relationship between electric current and electric potential indicated a waveform similar to rectangle. This represented that oxidation and reduction reactions did not occur on the electrode, and charging and discharging of the electric double layer was a main factor of electric current. In this waveform, the electric double layer capacity was calculated by dividing an average value of absolute values of oxidation current and reduction current at a certain electric potential such as 0.3 V by a scanning speed. This measurement was made under a variety of humidity conditions, thereby obtaining the relationship between the electric double layer capacity and the relative humidity.

Additionally, a value measured by a method discussed below is employed as the BET nitrogen specific surface area of the electrically conductive material.

(Measuring method of the BET nitrogen specific surface area)

1. Sampling, weighing and preliminary drying

About 0.04 to 0.07 g of powder was accurately weighed and encapsulated in a sample tube. This sample tube was subjected to a preliminary drying at 90 °C for several hours in a vacuum dryer and then subjected to a measurement. For weighing, an electronic weighing machine (AW220) produced by Shimadzu Corporation was used. Concerning a coated sheet, the purity net mass of about 0.03 to 0.04 g obtained by subtracting the mass of a Teflon (registered trade name) (base material) having the same area as the coated sheet from the whole mass of the coated sheet was used as a sample mass.

2. Measuring condition (see Table 3 shown below)

[Table 1]

Measuring apparatus: High accuracy fully automatic gas absorption apparatus BELSORP36 produced by BEL Japan Inc.

Absorbed gas: N2

Dead volume measurement gas: He

Absorption temperature: 77 K (liquid nitrogen temperature)

Measurement pretreatment: 90 °C vacuum drying for several hours (set at a measuring stage after He purging)

Measuring mode: Adsorption step and desorption step at the same temperature

Measuring relative pressure $P/P_0$: about 0 to 0.99

Equilibrium setting time: 180 sec. for 1 relative pressure

3. Measuring method

A BET plot is prepared from a range of about 0.00 to 0.45 in relative pressure ($P/P_0$) in an absorption side of an adsorption and desorption isothermal curve, upon which the BET nitrogen specific surface area is calculated from the inclination and segment of the plot.

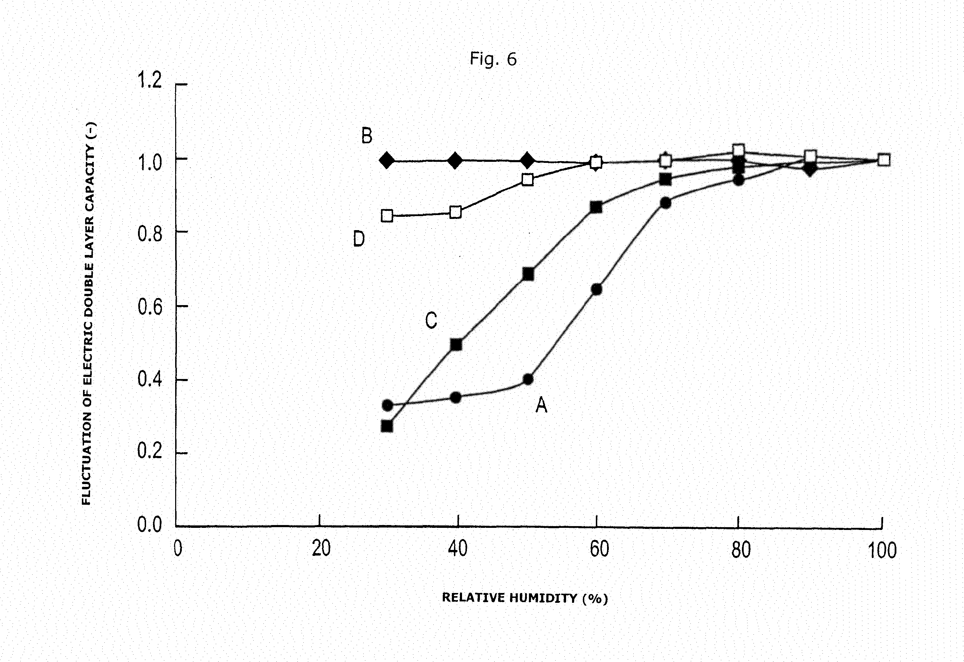

Fig. 6 are a graph that depicts the property of various electrically conductive materials in terms of a relationship between the relative humidity and the electric double layer capacity and a table that indicates $S_{BET}$, $\theta_{ion}$ and $S_{ion}$ of each of the electrically conductive materials. In the graph of Fig. 6, as carbon material, Carbon material A is Ketchen black EC (produced by Ketchen Black International Co., Ltd.); Carbon material B is a material which is prepared by making a heat treatment of 2000-3000 °C and 2 to 120 minutes to Ketchen black EC in an inert atmosphere; Carbon material C is acetylene black (SAB, produced by Denki Kagaku Kogyo Kabushiki Kaisha); and Carbon material D is acetylene black (OSAB, produced by Denki Kagaku Kogyo Kabushiki Kaisha).

Preferably, the covering ratio $\theta_{ion}$ of the hydrophilic material used in the invention is within a range of $\pm 20\%$ of the maximum value of the covering ratio $\theta_{ion}$ of the hydrophilic material.

Because of formation of the network among the hydrophilic materials, the hydrophilic material effectively used in the hydrophilic porous layer is increased and thus the phase change to the vapor phase is promoted.

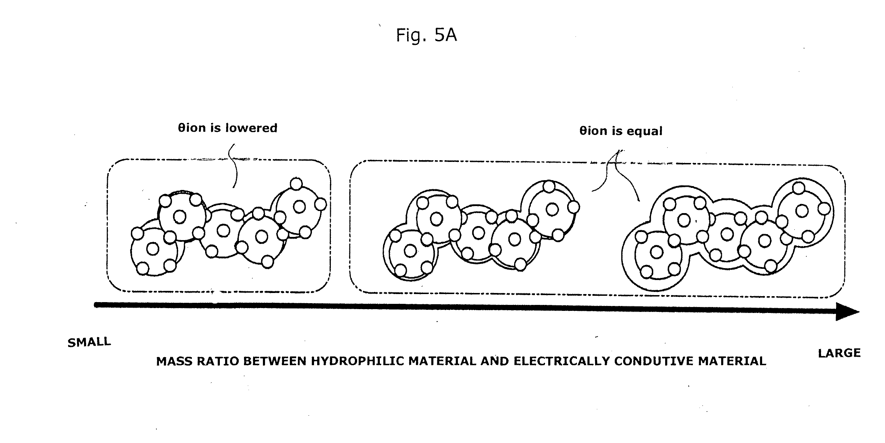

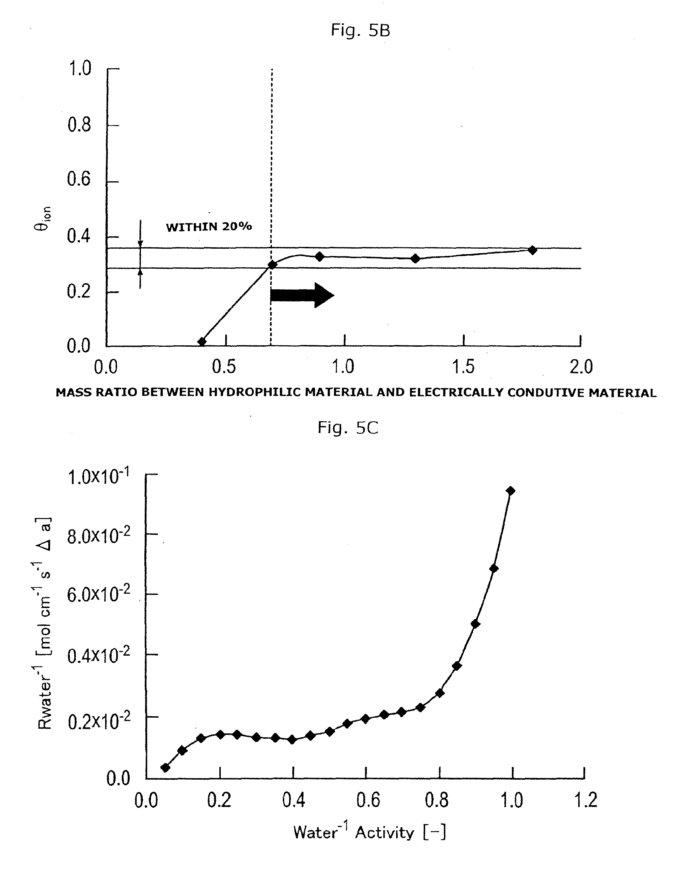

When the mass ratio between the hydrophilic material and the electrically conductive material (= mass of the hydrophilic material/mass of the electrically conductive material) is increased, the amount of the hydrophilic material in the system is increased, and thus, it is considered that the covering ratio $\theta_{ion}$ of the hydrophilic material, that corresponds to a contacting surface between the electrically conductive material and the hydrophilic material, is increased as a matter of course. That is, as is shown in the drawing of Fig. 5A, when the mass ratio between the hydrophilic material and the electrically conductive material is low, the covering ratio $\theta_{ion}$ that corresponds to the contacting surface between the electrically conductive material and the hydrophilic material is reduced. As a result, it is considered that the hydrophilic material in the aggregates of electrically conductive material and hydrophilic material does not establish a mutually intimate contact thereamong thereby failing to form continuous liquid water transportation paths. As is shown in Fig. 5B, the relationship between the mass ratio between the hydrophilic material and electrically conductive material and the covering ratio $\theta_{ion}$ of the hydrophilic material is so made that the covering ratio $\theta_{ion}$ of the hydrophilic material becomes constant once the mass ratio between the hydrophilic material and electrically conductive material exceeds a predetermined value. In the invention, preferably, the covering ratio $\theta_{ion}$ of the hydrophilic material is within a range of $\pm 20\%$ of the maximum value of the covering ratio $\theta_{ion}$ of the hydrophilic material. In this case, the hydrophilic material and electrically conductive material make mutually intimate contact therebetween and the hydrophilic material establishes a mutually intimate contact thereamong thereby forming continuous liquid water transportation paths.

In the invention, it is preferable that the covering ratio $\theta_{ion}$ of the hydrophilic material is smaller than 0.7, and more preferable that the ratio is not smaller than 0.2 and smaller than 0.7, and much more preferable that the ratio is not smaller than 0.2 and smaller than 0.5.

When the covering ratio $\theta_{ion}$ of the hydrophilic material relative to the electrically conductive material is not smaller than 0.2 and smaller than 0.7, the amount of water content is increased and the water diffusion coefficient possessed by the hydrophilic material is increased. Thus, the amount of water that can be contained in the hydrophilic porous layer of the invention is increased and thus, the ability of water discharging from the catalyst layer is increased.

Furthermore, when the covering ratio $\theta_{ion}$ of the hydrophilic material is within the above-mentioned range, fine bores 49 are formed as shown in Fig. 4 into which the hydrophilic material can not enter. Since the fine bores can hold liquid water, the amount of water content of the hydrophilic material in the vicinity of the fine bores is considered large as compared with that in case wherein such fine pores are not provided.

Furthermore, also in the relationship between a water activity and a water transport resistance ($R_{water}$) in case of the hydrophilic porous layer of Sample-A of an after-mentioned embodiment, it was found that presence of fine pores increases the water transportation ability (see Fig. 5C).

(Catalyst Component)

The catalyst component of the invention is needed when the hydrophilic porous layer of the invention is used as an electrode catalyst. In case of a cathode catalyst layer, there is no special limitation so long as it exhibits catalysis to the reduction reaction of oxygen, and known catalysts are usable. Furthermore, in case of an anode catalyst layer, there is no special limitation so long as it exhibits catalysis to an oxidation reaction of hydrogen in addition to catalysis to the reduction reaction of oxygen, and known catalysts are usable. More specifically, the catalyst component is selected from metals such as platinum, ruthenium, iridium, rhodium, palladium, osmium, tungsten, lead, iron, chromium, cobalt, nickel, manganese, vanadium, molybdenum, gallium, aluminum and the like, and alloy and the like thereof. Among these catalyst components, the catalyst component used for the catalyst component membrane in the invention is preferably at least Pt or an alloy containing Pt.

The composition of the above-mentioned alloy preferably contains 30 to 90 atomic % of platinum and 10 to 70 atomic % of a metal to be alloyed with platinum, according to kinds of metals to be alloyed with platinum. It is to be noted that the alloy is a generic name for ones which are prepared by adding one or more kinds of metal elements or non-metal elements to a metal element and which have properties of metals.

As a structure of the alloy, there are an eutectic alloy which is, so to speak, a mixture wherein component elements form separate crystals, one in which component elements completely melt to form a solid solution, and one in which component elements form an intermetallic compound or a compound of metal and non-metal. In the invention, either one may used for the present invention.

The catalyst component membrane may be of a layered structure including a plurality of layers. For example, the catalyst component membrane may be of a double layer structure including a Pt layer and a Pt alloy layer or a layered structure including layers each containing other metals.

The shape and size of the catalyst component in the invention are not particularly limited so that similar shape and size to those of known catalyst components may be used, in which the catalyst component is preferably granular. In this connection, the mean particle diameter of a catalyst particle is preferably 1 to 30 nm, more preferably 1.5 to 20 nm, most preferably 2 to 10 nm, and particularly preferably 2 to 5 nm. If the mean particle diameter of the catalyst particle is within such a range, a balance between a catalyst utilization factor in connection with an effective electrode area where an electrochemical reaction proceeds and a convenience in catalyst-carrying may be suitably controlled. It is to be noted that "the mean particle diameter of the catalyst particle" may be measured as a crystal size determined from the half bandwidth of a diffraction peak of the catalyst component in a X-ray diffraction or as a mean value of the particle diameter of the catalyst component obtained from the image of a transmission electron microscope.

(Gas diffusion electrode)

The second embodiment of the invention is a gas diffusion electrode which is characterized by having both a catalyst layer that includes aggregates of electrically conductive material and hydrophilic material, each aggregate having the catalyst component that forms in the hydrophilic material continuous liquid water transportation paths by establishing a mutually intimate contact between the hydrophilic material and the electrically conductive material that carries thereon the catalyst component and establishing a mutual connection between parts of the hydrophilic material, and a hydrophilic porous layer according to the invention, in which the catalyst layer and the hydrophilic porous layer are intimately arranged.

With the above-mentioned construction, there can be provided liquid water transportation paths each extending from the catalyst layer to the hydrophilic porous layer and a hydrophilic treating section. As a result, the liquid water from the catalyst layer can be effectively transported to the outside of the system. Preferably, the catalyst layer contains a catalyst component, a hydrophilic material and an electrically conductive material, and as the need arises, electrolyte and other suitable additives. The catalyst layer may be a layer that contains the aggregates of electrically conductive material and hydrophilic material and form therein transportation paths for water vapor in addition to the aggregates of electrically conductive material and hydrophilic material that contain the catalyst component.

The thickness of the gas diffusion electrode may be decided by taking a special property of a membrane electrode assembly to be obtained. However, preferably, the thickness is 50 to 400 $\mu$m, more preferably 100 to 300 $\mu$m.

(Membrane Electrode Assembly)

A third embodiment of the invention is a membrane electrode assembly that comprises a polyelectrolyte membrane and paired gas diffusion electrode layers of the invention having the polyelectrolyte membrane sandwiched therebetween, or a membrane electrode assembly that comprises a polyelectrolyte membrane, paired catalyst layers of the invention having the polyelectrolyte membrane sandwiched therebetween and gas diffusion layers of the invention having the paired catalyst layers sandwiched therebetween.

It is preferable to use the hydrophilic porous layer of the invention as an electrode catalyst layer and/or a gas diffusion layer. In the following, various construction elements of the membrane electrode assembly of the invention will be described.

(Electrolyte membrane)

The polyelectrolyte membranes used for producing the membrane electrode assembly of the invention are not particularly limited. One example of the polyelectrolyte membranes is a membrane that includes a polyelectrolyte made of the same polyelectrolyte as the hydrophilic material used for the electrode catalyst layer. Examples of the polyelectrolyte membranes are market placed polymer type electrolyte membranes such as perfluoro sulfonic acid membrane represented by Nafion (registered trade name) and Flemion (registered trade name), ion changing resin produced by Dow Chemical Company, etylen-tetra fluorinated ethylene copolymer resin membrane, fluorine-based polyelectrolyte membrane such as a resin membrane that uses as a base polymer trifluorostyrene, and hydrocarbon-based resin membrane with sulfonic acid group, a membrane produced by infiltrating liquid electrolyte into polymer fine porous membrane and a membrane produced by filling a porous member with a polyelectrolyte. The polyelectrolyte used for the polyelectrolyte membrane and the polyelectrolyte used for the above-mentioned electrode catalyst layer may be of the same type or different type. However, from the viewpoint of improvement in the intimate contact property, it is preferable to use the same type.

The thickness of the polyelectrolyte membrane may be decided by taking a special property of an electrolyte membrane electrode assembly to be obtained. However, preferably, the thickness is 1 to 50 $\mu$m, more preferably 2 to 30 $\mu$ m, much more preferably, 5 to 30 $\mu$m. From the viewpoints of the strength under production process and the durability at the time of operation of the membrane electrode assembly, it is preferable that the thickness is greater than 1 $\mu$m, and from the viewpoint of the output property at the time of operation of the membrane electrode assembly, it is preferable that the thickness is smaller than 50 $\mu$m.

As the polyelectrolyte membrane, a resin made of the fluorine-based polyelectrolyte and a resin made of hydrocarbon-based resin with sulfonic acid group can be used as is mentioned hereinabove. If desired, a membrane produced by infiltrating an electrolyte component, such as phosphoric acid, ionic liquid or the like, to a porous membrane made of polytetrafluoroethylene (PTFE), polyvinylidence fluoride (PVDF) or the like may be used.

(Catalyst layer)

In case wherein the hydrophilic porous layer of the invention is used only for the gas diffusion layer, the catalyst layer of the invention is the layer in which the above-mentioned chemical formula-1 is actually carried out. Specifically, in the anode catalyst layer, oxidation reaction of hydrogen is carried out, and in the cathode catalyst layer, reduction reaction of oxygen is carried out. The catalyst layer contains a catalyst component, an electrically conductive carrier that carries thereon the catalyst component, and a polyelectrolyte having a proton conductivity. The catalyst component used for the anode side catalyst layer has no limitation in type so long as it exhibits catalysis to the oxidation reaction of hydrogen, and thus, known catalysts can be similarly used. Similarly, the catalyst component used for the cathode side catalyst layer has no limitation in type so long as it exhibits catalysis to the reduction reaction of oxygen, and thus, known catalysts can be similarly used. Since the catalyst component for the catalyst layer is the same as that mentioned in the column of (Catalyst Component), explanation on the catalyst component will be omitted.

The above-mentioned electrically conductive carrier functions as a carrier that carries thereon the above-mentioned catalyst components and as an electronically conductive path that effects electron transfer between it and the catalyst component.

As the electrically conductive carrier of the invention, it is sufficient to have a specific surface area for carrying the catalyst component in a desired dispersed state and a sufficient electronic conductivity, and it is preferable to be formed of a carbon-based material whose main component is carbon. Specifically, examples of the carbon-based material include carbon particles formed of carbon black, graphitization-treated carbon black, activated carbon, coke, natural graphite, artificial graphite, carbon nanotube, carbon nanohorn, carbon fibril structure, and/or the like. It is to be noted that the fact that "main component is carbon" means that carbon atom is contained as the main component, and therefore the fact is an idea including both a matter of being formed of only carbon atom and another matter of being substantially formed of carbon atom. According to cases, element(s) other than carbon atom may be contained in the electrically conductive carrier in order to improve the characteristics of a fuel cell. It is to be noted that the fact that "substantially formed of carbon atom" means that about 2 to 3 mass % or less of impurity getting mixed is permissible. The electrically conductive carrier in the invention may use the same material as the electrically conductive material.

The BET specific surface area of the above-mentioned electrically conductive carrier may be sufficient to allow the catalyst component to be carried under a highly dispersed state, in which it is preferably 20 to 1600 $m^2$/g and more preferably 80 to 1200 $m^2$/g. With the specific surface area within such a range, the balance between the dispersability of the catalyst component on the electrically conductive carrier and the effective utilization factor of the catalyst component can be suitably controlled.

The size of the above-mentioned electrically conductive carrier is not particularly limited, in which it is good that a mean particle diameter is 5 to 200 nm, preferably about 10 to 100 nm from the viewpoints of convenience of carrying, catalyst utilization factor and controlling the thickness of the electrode catalyst layer within a suitable range.

In the complex in which the catalyst component is carried on the electrically conductive carrier, a carried amount of the catalyst component is preferably 10 to 80 mass %, more preferably 30 to 70 mass % relative to the whole amount of the electrode catalyst. If the carried amount of the catalyst component is within such a range, a balance between a dispersion degree of the catalyst component on the electrically conductive carrier and a catalyst performance can be suitably controlled. It is to be noted that the carried amount of the catalyst component can be measured by an inductively coupled plasma emission spectrochemical analysis method (ICP).

It is preferable that graphitized electrically conductive material such as graphitization-treated carbon black is used in the above-mentioned catalyst layer, particularly in the anode-side catalyst layer, in which graphitized carbon material is more preferably used for the electrically conductive carrier because a corrosion resistance of the electrically conductive material can be improved. However, the graphitized electrically conductive material is small in cover area with the ion conductive material and therefore small in evaporation area for liquid water, so as to have fears of freezing at sub-zero temperature or flooding at normal temperature. By disposing the hydrophilic porous layer adjacent to the catalyst layer using the graphitized electrically conductive material, the water-drainage can be improved thereby making the sub-zero temperature starting ability and the high current density operation at normal temperature compatible with each other and offering the a membrane electrode assembly provided with the corrosion resistance for the electrically conductive material as discussed after. The graphitization-treated carbon black is preferably spherical, in which the means lattice spacing $d_{002}$ of [002] planes calculated under X-ray diffraction is preferably 0.343 to 0.358 nm, and the BET specific surface area is preferably 100 to 300 $m^2$/g.

Additionally, carrying the catalyst component on the above-mentioned electrically conductive carrier can be accomplished by known methods. For example, the known methods such as impregnation method, liquid phase reduction carrying method, evaporation to dryness method, colloid adsorption method, evaporative decomposition method, reversed micelle (microemulsion) method, and the like can be used.

Or, in the present invention, marketed products may be used as the complex in which the catalyst component is carried on the electrically conductive material. Examples of such marked products include, for example, one produced by Tanaka Kikinzoku Kogyo K.K., one produced by N.E. Chemcat Corporation, one produced by E-TEK one produced by Johnson Matthey, and the like. These electrode catalysts are ones in which platinum or platinum alloy is carried on a carbon carrier (a carried concentration of a catalyst species: 20 to 70 mass %). In the above-mentioned, examples of the carbon carrier are Ketchen Black, Vulcan, acetylene black, Black Pearls, graphitization-treated carbon carrier which is previously heat-treated at a high temperature (for example, graphitization-treated Ketchen Black), carbon nanotube, carbon nanohorn, carbon fiber, mesoporous carbon, and the like.

The catalyst layer in the invention contains, in addition to an electrode catalyst, an ion-conductive polyelectrolyte. The polyelectrolyte is not particularly limited, and thus known knowledge can be practically used. For example, an ion exchange resin forming the above-mentioned electrolyte member can be added, as a polyelectrolyte, to the catalyst layer by preferably 50 to 150 mass parts relative to 100 mass parts of the electrically conductive carrier in the catalyst layer, and more preferably, by 70 to 130 mass parts relative to 100 mass parts of the carrier.

(Gas diffusion layer)

In case wherein the hydrophilic porous layer in the invention is used for only the catalyst layer, the gas diffusion layer has a function to promote diffusion of gas (fuel gas or oxidizer gas) supplied to the system through a separator flow path into the catalyst layer and a function to serve as an electron conduction path.

The material constituting the base material of the gas diffusion layer in the invention is not particularly limited, in which hitherto known knowledge can be suitably referred to. Examples of the material include sheet-like materials having electrical conductivity and porosity such as a fabric made of carbon, a paper-like body formed by paper-making, a felt, nonwoven fabric and the like. The thickness of the base material may be suitably decided upon taking account of the characteristics of the obtained gas diffusion layer, in which it is preferably about 30 to 500 $\mu$m. If the thickness of the base material is a value within such a range, a balance between a mechanical strength and diffusibility of gas and water can be suitably controlled.

If the gas diffusion layer possesses an excellent electronic conductivity, effective transport of electrons produced due to the power generation reaction is achieved and thus the performance of the fuel cell is increased. Furthermore, if the gas diffusion layer possesses an excellent water repellency, water produced can be effectively transported.

Furthermore, the above-mentioned gas diffusion layer preferably includes a water repellent agent for the purpose of improving the water repellent property thereby preventing a flooding phenomena. The water repellent agent is not particularly limited, in which examples of it include a fluorine-based polymer material such as polytetrafluoroethylene (PTFE), polyvinylidene fluoride (PVdF), polyhexafluoropropylene, tetrafluoroethylene-hexafluoropropylene copolymer (FEP) and the like, polyprolylene, polyethylene, and the like.

Additionally, in order to further improve the water repellent property, the gas diffusion layer may be provided, at the side of the catalyst layer, with a carbon particle layer (microporous layer: MPL) that includes binder and aggregate of carbon particles containing a water repellent agent. Additionally, a film itself including the carbon particle and binder may be used as the gas diffusion layer.

The carbon particles contained in the carbon particle layer are not particularly limited, in which hitherto known materials such as carbon black, graphite, expandable graphite and the like can be suitably used. Of these, carbon black such as oil furnace black, channel black, lamp black, thermal black, acetylene black and the like can be preferably used. A mean particle diameter of the carbon particle is preferably about 10 to 100 nm. By this, a high water-drainage due to capillary tube action can be obtained while it becomes possible to improve contact of the carbon particles with the catalyst layer.

As the water repellent agent used in the carbon particle layer, ones similar to the above-mentioned water repellent agents are given. Of these, fluorine-based polymer materials can be preferably used because of being excellent in water repellency and corrosion resistance during electrode reaction, and the like.

The mixing ratio of the carbon particles and the water repellent agent is preferably about 90 : 10 to about 40 : 60 (carbon particles : water repellent agent) in mass ratio upon taking account of a balance between water repellent characteristics and electron conductivity. It is to be noted that a thickness of the carbon particle layer is not particularly limited, in which it may be suitably decided upon taking account of the water repellent characteristics of the obtained gas diffusion layer.

Preferably, an effective diffusion coefficient (D) of water vapor of the gas diffusion layer satisfies the equation "D$\geqq$ 2.0 x 10$^{-5}$ $\times$ $\varepsilon^{\gamma}$ m$^2$/s" (wherein $\varepsilon$: the porosity of the gas diffusion layer; and $\gamma$: the inflection degree of the gas diffusion layer). More preferably, the coefficient(D) satisfies the equation "D$\geqq$ 3.39 x 10$^{-5}$ $\times$ $\varepsilon^{\gamma}$ m$^2$/s". Within such ranges, lowering in gas transportability of the adjacent hydrophilic porous layer can be suppressed.

In case wherein the effective diffusion coefficient of the gas diffusion layer is higher than the above-mentioned value, a molecular diffusion is established in which collision among gas molecules become rate-limiting. When the effective diffusion coefficient becomes lower than this value, a Knudsen diffusion is established in which collision of gas molecules with pore walls becomes rate-limiting thereby raising a case wherein diffusibility is rapidly lowered. During electricity generation, there is a case wherein a lowering margin of diffusibility relative to lowering of the porosity due to adherence of produced water and the like becomes large. It is to be noted that the porosity $\varepsilon$ of the above-mentioned gas diffusion layer can be calculated from a porosity amount and a volume obtained by the mercury press-in method.

Preferably, the pore diameter of pores in the base material of the gas diffusion layer has the minimum value (viz., minimum pore diameter) not smaller than 1 $\mu$m. When the minimum pore diameter is not smaller than 1 $\mu$m, the diffusion of water vapor by Knudsen diffusion is reduced to a neglectable level thereby causing the diffusion of water by molecular diffusion to become remarkable, and thus, the transport speed of the water vapor can be much increased. Accordingly, the water discharging speed can be increased. It is to be noted that the minimum pore diameter of the base material of the gas diffusion layer can be obtained from a fine pore distribution measurement by the mercury press-in method or the like. The upper limit value of the minimum pore diameter is not particularly limited, but, practically, it is about 10 $\mu$m.

It is preferable that the gas diffusion layer comprises a hydrophilic porous layer that includes both a hydrophilic material (ion-conductive material) and an electrically conductive material covered with the hydrophilic material (ion-conductive material) and a porous base material of gas diffusion layer, and at least part of the hydrophilic porous layer is set in the base material of the gas diffusion layer and at least part of the base material of gas diffusion layer is subjected to a hydrophilic treatment to form a hydrophilically treated portion. With this, the surface area of the gas-liquid interface wherein liquid water can evaporate can be much increased and thus the water discharging speed is much increased. As a result, water produced during sub-zero temperature electricity generation becomes difficult to be accumulated in the pores thereby suppressing lowering in diffusibility of reaction gas and thus making it possible to improve a sub-zero temperature electricity generation performance.

The above-mentioned hydrophilically treated portion preferably includes one or more selected from the group consisting of an ion conductive material, a metal oxide, and a hydrophilic polymer. Further specific examples of the ion conductive material include, for example, perfluorosulfonic acid, sulfonated polyetherether ketone and the like. Further specific examples of the metal oxide include, for example, titanium oxide, zirconium oxide and the like. Further specific examples of the hydrophilic polymer include, for example, polyacrylic acid, polyacrylamide and the like.

At least part of the hydrophilic porous layer may be buried in the gas diffusion layer base material, but preferably, a section having a thickness of 10 to 100 % relative to the thickness of the hydrophilic porous layer is buried inside the gas diffusion layer base material. In case wherein a section having a thickness of 10 % or more relative to the thickness of the hydrophilic porous layer is buried, a continuous hydrophilic network can be formed in the region from the hydrophilic porous layer to the gas diffusion layer base material. Further, since the water transportation distance can be shortened, the water discharging speed of can be increased. It is preferable that the entire construction of the hydrophilic porous layer is buried, i.e., the hydrophilic porous layer is formed inside the gas diffusion layer. This corresponds to a mode wherein 100 % in thickness of the hydrophilic porous layer is buried in the gas diffusion layer base material. With such mode, the above-mentioned effects can be particularly remarkably obtained.

It is to be noted that the binder refers to substances that have a role of binding. Although, in the embodiments of the invention, there is used a fluorine-based resin that has a role of binding as well as a role of water repellency, usage is not limited to such fluorine-based resin. That is, usage may be directed to a substance that is provided by mixing a separate binder and a separate water repellent agent.

In the membrane electrode assembly in the invention, the amount of additive used as the need arises, such as alcohols (methanol, ethanol, propanol and the like), water, water repellent agent and binder, is suitably selected in accordance with conditions.

(Production method for hydrophilic porous layer and gas diffusion electrode)

In the following, one suitable example of production methods for the hydrophilic porous layer and gas diffusion electrode will be described.

(Production method for the hydrophilic porous layer)

The production method for the hydrophilic porous layer in the invention is for example as follows. That is, an electrically conductive material of 2 to 13.3 mass %, a hydrophilic material of 1.7 to 12 mass % and a solvent of 80 to 95 mass % are mixed. Then, it is preferable that as the need arises, binder of 0 to 15 mass % is added to the mixture as the other additive to adjust an ink for the hydrophilic porous layer.

Then, after the ink is applied to a given base material, the given base material on which the ink has been applied is dried. In case of using an electrically conductive material that has a catalyst component carried thereon, it is preferable that the catalyst component is previously applied to the electrically conductive material by using known methods, such as impregnation method, liquid phase reduction carrying method, evaporation to dryness method, colloid adsorption method, evaporative decomposition method, reversed micelle (microemulsion) method and the like. Additionally, it is preferable that before the ink is adjusted, the electrically conductive material is subjected to a surface treatment with the aid of acid. Furthermore, in case of using the electrically conductive material that has the catalyst component carried thereon, for example, an electrically conductive material of 2.1 to 15.7 mass %, a hydrophilic material of 1.1 to 11.5 mass % and a solvent of 80 to 95 mass % are mixed. Then, it is preferable that as the need arises, binder of 0 to 15 mass % is added to the mixture as the other additive to adjust the ink for the hydrophilic porous layer.

Furthermore, in case of using the electrically conductive material that has the catalyst component carried thereon, the content of the catalyst component in the electrically conductive material is preferably 10 to 80 mass %, more preferably 30 to 70 mass %.

Although the above-mentioned drying condition is not particularly limited, it is preferable that the drying is made at 20 to 170 °C for about 1 to 40 minutes. It is to be noted that the step of the heat treatment is sufficient to be made at any stage of the production process for the membrane electrode assembly, so that limitation is not made to a mode in which the ink for the hydrophilic porous layer is dried immediately after the ink for the hydrophilic porous layer is applied onto the base material.

Additionally, an atmosphere for drying is not particularly limited, in which drying is preferably made in the atmosphere of air or in the atmosphere of an inert gas. A step for drying the ink for the hydrophilic porous layer may be made at any step in the membrane electrode assembly production process, so that limitation is not made to a mode in which the ink for the hydrophilic porous layer is dried immediately after the ink for the hydrophilic porous layer is applied onto the base material.

The base material on which the ink for the hydrophilic porous layer is to be applied may be suitably selected according to the mode of the finally obtained hydrophilic porous layer, and thus, the catalyst layer, the gas diffusion layer or a high polymer sheet such as the sheet of polytetrafruoro ethylene (PTFE) may be used.

It is preferable that the ink for the hydrophilic porous layer in the invention contains an electrically conductive material, a hydrophilic material and a solvent and as the need arises a catalyst component, an electrolyte, a binder and a pore former.

With the above, the pore diameter of pores in the hydrophilic porous layer can be increased. As a result, a transport resistance of vapor phase in the layer can be reduced. As the pore former, organic solvent (propylene glycol, ethylene glycol or the like) having a boiling point not lower than 150 °C or crystalline carbon fiber (VGCF) is employed, and it is preferable to add the pore former to a dispersant of the hydrophilic porous layer by the amount of 20 to 60 mass %. Furthermore, the pore former may be of a type that has the same solvent as that of a pore former that adjusts the ink for the hydrophilic porous layer in the invention.

Although the solvent used for the hydrophilic porous layer is not particularly limited, its examples are water; alcohol such as methanol, ethanol, 1-propanol, 2-propanol, 1-butanol, 1-pentanol, 2-pentanol, 3-pentanol and the like; and polyalcohol such as ethylene glycol, propylene glycol, 1,2-butane diol, 1,3-butane diol, 1,4-butane diol, glycerol and the like. These may be used one kind singly or in combination of two or more kinds.

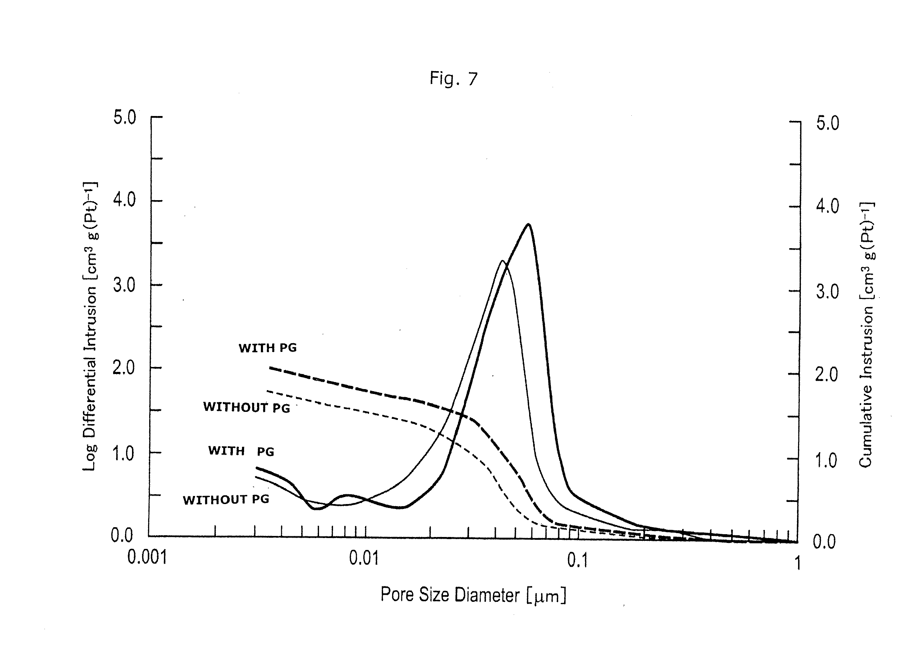

Selection of the above-mentioned pore former and solvent is important to control the porosity of the hydrophilic porous layer. As will be discussed later, in case of producing the hydrophilic porous layer of the invention, it is preferable to use, for the ink for the hydrophilic porous layer, a pore former (viz., solvent mixed with a high boiling point organic solvent whose boiling point exceeds 150 °C) or a crystalline carbon fiber. In case that the high boiling point organic solvent whose boiling point exceeds 150 °C is mixed with the ink, the mean pore diameter can be increased while the porosity can also be increased. In case of adding the pore former to the ink, the mean pore diameter can be increased, and the porosity can be also increased. Difference in distribution of pore diameter of the hydrophilic porous layer according to the solvent kinds in the inks is shown in Fig. 7. In Fig. 7, Pore Size Diameter indicates the pore diameter; Cumulative Intrusion (mL/g) indicates the cumulative volume; and Log Differential Intrusion (mL/g) indicates the differentiated pore volume. In Fig. 14, the composition of Solvent 1 is water : NPA (normal propyl alcohol) : propylene glycol = 4 : 1 : 3 (mass ratio); and the composition of Solvent 2 is water : NPA (1-propernol) = 6 : 4.

Examples of the high boiling point organic solvent whose boiling point exceeds 150 °C include ethylene glycol (boiling point: 197. 6 °C), propylene glycol (boiling point: 188.2 °C), 1,2-butane diol (boiling point: 190.5 °C), 1,3-butane diol (boiling point: 207.5 °C), 1,4-butane diol (boiling point: 229.2 °C), glycerol (boiling point: 290 °C), NMP (N-methylpyrrolidone) (boiling point: 202 °C), DMSO (dimethyl sulfoxide) (boiling point: 189 °C), and the like. These may be used one kind singly or in combination of two or more kinds. It is to be noted that the high boiling point organic solvent is preferably uniformly mixed with water.

It is to be noted that the solvent or dissolving agent in the present specification includes a dispersion medium in which solid contents such as binder, the electrically conductive material and the like are to be dispersed, i.e., all liquid contents other than solid contents and pore former. Accordingly, for example, in case of producing the ink for the hydrophilic porous layer by mixing both the hydrophilic material that is an ion conductive material dispersed in water and the organic solvent, the solvent described in the present specification means both the water and the organic solvent.

Although a solid content rate of the ink for the hydrophilic porous layer in the invention (viz., a rate of the solid content relative to whole mass of the hydrophilic porous layer) is not particularly limited, it is normally about 5 to 20 mass %. With such range, a forming efficiency of the porous layer and a stability of the ink are improved.

It is preferable that the hydrophilic porous layer in the invention is produced by using an ink that includes an electrically conductive material, a hydrophilic material and a solvent and has secondary particles of which mean particle diameter is not smaller than 0.5 $\mu$m and mode diameter of which is not smaller than 0.35 $\mu$m.

With usage of such ink, due to the increased particle diameter of the secondary particles, the pore diameter of the pores in the hydrophilic porous layer can be increased. As a result, the transport resistance for the vapor phase in the layer can be decreased.

The secondary particles in the ink that includes the electrically conductive material, the hydrophilic material and the solvent correspond secondary particles that are aggregates of the electrically conductive material and primary particles of the electrically conductive material in the invention, aggregates of the electrically conductive material and the hydrophilic material and/or precursors of the aggregates of the electrically conductive material and the hydrophilic material. Preferably, the secondary particles are not smaller than 0.35 $\mu$m and not larger than 0.40 $\mu$m in mode diameter and not smaller than 0.5 $\mu$m and not larger than 0.8 $\mu$m in mean particle diameter, so that the pore diameter of pores in the hydrophilic porous layer can be increased.

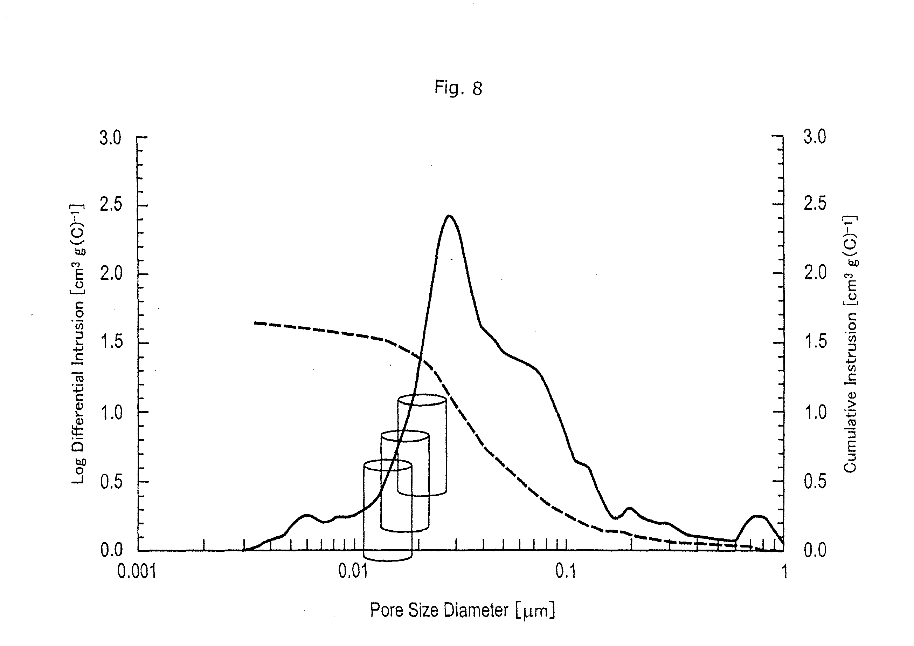

It is to be noted that the above-mentioned mode diameter and mean particle diameter were calculated by employing a laser diffraction type pore size distribution measurement. A relationship between a particle diameter of secondary particles and a porosity of Sample-A of an after-mentioned embodiment is shown in Fig. 8.

The method of adjusting the ink for the hydrophilic porous layer in the invention is not particularly limited, and a mixing order for the hydrophilic material, electrically conductive material, solvent and electrolyte and pore former which are employed if needed, is not particularly limited.

The solution that contains the hydrophilic material in the invention may be adjusted personally or may use commercially available one. Although a dispersion solvent for the hydrophilic material in the solution that contains the above-mentioned hydrophilic material is not particularly limited, its examples are water, methanol, ethanol, 1-propanol, 2-propanol and the like. Considering the dispersability, water, ethanol and 1-propanol are desirable. These dispersion solvents may be used single or in combination of two or more kinds.

In a production process of the ink for the hydrophilic porous layer, after the hydrophilic material, the electrically conductive material and the solvent are mixed, a separate mixing step may be made in order to accomplish good mixing. A preferable example of such mixing step is to sufficiently disperse a catalyst ink by a ultrasonic homogenizer, or to sufficiently pulverize this mixture slurry by a sand grinder, a circulating ball mill, a circulating bead mill and the like, followed by making a vacuum degassing operation.

Next, after the obtained ink for the hydrophilic porous layer is applied on the base material, the base material on which the ink for the hydrophilic porous layer is applied is dried.

An applying method of the ink for the hydrophilic porous layer onto the surface of the base material or the electrolyte membrane is not particularly limited, and therefore known methods can be used. Specifically, known methods such as spray (spray applying) method, Gulliver printing method, die coater method, screen printing method, doctor blade method, transfer printing method and the like can be used. Additionally, an apparatus used for applying the catalyst ink onto the surface of the base material is also not particularly limited, in which known apparatuses can be used. Specifically, applying apparatuses such as a screen printer, a spray apparatus, a bar coater, a die coater, a reverse coater, a comma coater, a gravure coater, a spray coater, a doctor knife and the like can be used. It is to be noted that the applying step may be accomplished once or repeatedly several times.

(Production method for gas diffusion electrode)

A production method for the gas diffusion electrode according to the present invention is preferably so made that the ink (1) for hydrophilic porous layer that contains the electrically conductive material, the hydrophilic material and the solvent and the ink (2) for hydrophilic porous layer that includes the electrically conductive material with the catalyst component carried thereon, the hydrophilic material and the solvent are applied in turn.

With such method, in case of producing a membrane electrode assembly of which stacking order is like - the electrolyte membrane - the catalyst layer - the hydrophilic porous layer -, it is possible to produce it by previously stacking the catalyst layer and the hydrophilic porous layer. Accordingly, an adhesiveness between the hydrophilic porous layer and the electrolyte of the catalyst layer that is beside the hydrophilic porous layer can be improved. As a result, the transport resistance against the liquid phase between the hydrophilic porous layer and the adjacent catalyst layer can be reduced.

Much detailed explanation on the production method for a gas diffusion electrode and a membrane electrode assembly in the invention will be made as a preferable embodiment in the following. That is, in the following, two methods will be described in such a manner as to part the steps.

First method: (Step 1) The ink (1) for the hydrophilic porous layer is produced by mixing the electrically conductive material of 2.1 to 15.7 mass %, the hydrophilic material of 1.1 to 11.5 mass % and the solvent of 80 to 95 mass %. Then, if need arises, other binder of 0 to 15 mass % is preferably add to the mixture to control the ink for the hydrophilic porous layer.

The ink (2) for the hydrophilic porous layer is produced by mixing the catalyst component carrying electrically conductive material of 2.1 to 15.7 mass %, the hydrophilic material of 1.1 to 11.5 mass % and the solvent of 80 to 95 mass %. Then, if need arises, other binder of 0 to 15 mass % is preferably added to the mixture to control the ink for the hydrophilic porous layer.

(Step 2) Then, after the ink (1) is applied to the base material, it is preferable to apply the ink (2) onto the ink (1) already applied to the base material. After the ink (1) is applied to the base material, a drying step may be employed or not employed.

(Step 3) It is preferable to employ a method in which by using a given method, a gas diffusion electrode, which has the hydrophilic porous layer that has the catalyst component carrying electrically conductive material stacked thereon and is obtained from the ink (2), is transfer-printed onto the electrolyte membrane provided on the hydrophilic porous layer obtained from the ink (1).

Second method: (Step 1) The ink (1) for the hydrophilic porous layer is produced by mixing the electrically conductive material of 2.1 to 15.7 mass %, the hydrophilic material of 1.1 to 11.5 mass % and the solvent of 80 to 95 mass %. Then, if need arises, other binder of 0 to 15 mass % is preferably added to the mixture to control the ink for the hydrophilic porous layer.

The ink (2) for the hydrophilic porous layer is produced by mixing the catalyst component carrying electrically conductive material of 2.1 to 15.7 mass %, the hydrophilic material of 1.1 to 11.5 mass % and the solvent of 80 to 95 mass %. Then, if need arises, other binder of 0 to 15 mass % is preferably added to the mixture to control the ink for the hydrophilic porous layer.

(Step 2) Then, after the ink (2) is applied to the electrolyte membrane, it is preferable to apply the ink (1) onto the ink (2) already applied to the electrolyte membrane. In this case, after the ink (1) is applied to the electrolyte membrane, a drying step may be employed or not employed. However, it is preferable to employ the drying step.

(Step 3) The membrane electrode assembly is obtained which comprises the electrolyte membrane, the hydrophilic porous layer that includes the catalyst component carrying electrically conductive material and is obtained from the ink (2) and the hydrophilic porous layer that is obtained from the ink (1), these elements being stacked onto one another in order.

[Production method for the membrane electrode assembly]

In the production method for the membrane electrode assembly in the invention, a catalyst layer ink produced by mixing the catalyst component carrying electrically conductive material, the electrolyte and the like is prepared and the ink for the hydrophilic porous layer is provided by the above-mentioned method. Then, a hydrophilic porous layer slurry is applied onto a base material such as a sheet formed of PTFE. Then, the catalyst layer ink is applied to the hydrophilic porous layer slurry to form a catalyst layer. The hydrophilic porous layer - catalyst layer laminate obtained in the above-mentioned way is transfer-printed onto the electrolyte membrane for its production. In case of using the sheet of PTFE as the base material, after making hot pressing, only the sheet of PTFE is peeled off and thereafter, the gas diffusion layer may be stacked on it. If desired, the production may be so made that the above-mentioned gas diffusion electrode is transfer-printed to the electrolyte membrane and fixed to the electrolyte membrane by the hot pressing method to produce the membrane electrode assembly.

Preferably, the transfer-printing by the hot pressing is carried out under a condition wherein 90 to 170 °C, 1 to 30 min and 0.5 to 1.5Mpa are kept.

The step for drying the ink for the hydrophilic porous layer, which has been explained in the above-mentioned production method for the hydrophilic porous layer, may be applied to any one of steps effected for the production of the membrane electrode assembly, that is, the drying step is not limited to a pattern in which just after the ink for the hydrophilic porous layer is applied to the base material, the kin for the hydrophilic porous layer is dried.

(Fuel cell)

It is preferable that the fuel cell in the invention has such a construction that the above-mentioned fuel cell membrane electrode assembly is sandwiched by a pair of separators.

In the following, PEFC as a preferable embodiment using MEA according to the present invention will be described with reference to drawings.

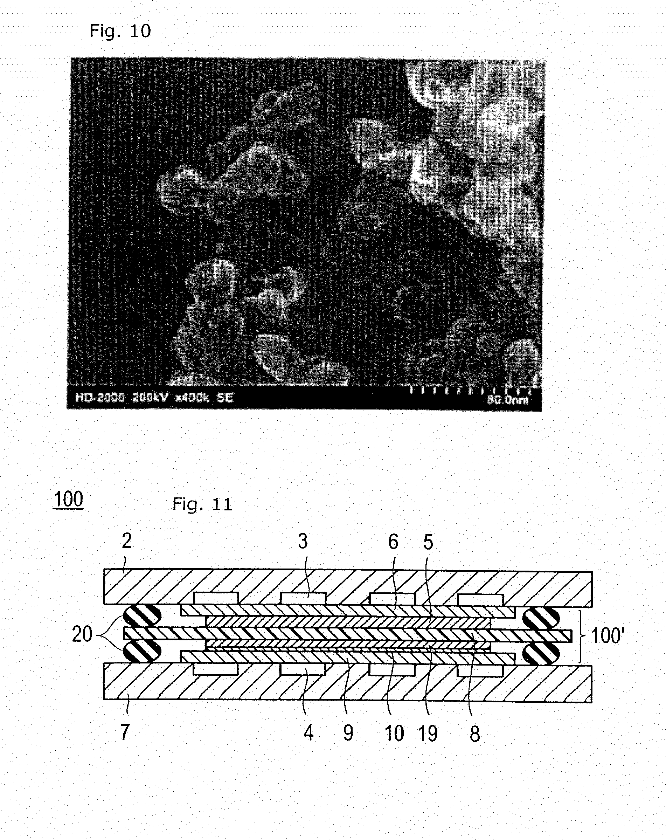

Fig. 11 is a schematic sectional view showing an example of the preferred embodiment of the invention which is a single cell of PEFC in which the fuel cell membrane electrode assembly is sandwiched between the paired separators.

It is preferable that the fuel cell is so constructed that the fuel cell membrane electrode assembly 100' is sandwiched by an anode side separator 7 and a cathode side separator 2. Fuel gas and oxidizer gas to be supplied to the fuel cell membrane electrode assembly 100' are supplied through a plurality of gas supply grooves 3 and 4 that are formed respectively in the anode side separator 7 and cathode side separator 2. In PEFC 100, gaskets 20 are arranged to surround electrodes placed on outer surfaces of the fuel cell membrane electrode assembly 100'. Each gasket 20 is a seal member and may have such structure that it is secured to the outer surface of the solid polymer electrolyte membrane 8 of the fuel cell membrane electrode assembly 100' through an adhesive layer. Each gasket 20 has such a function as to assure sealing between the separator and the fuel cell membrane electrode assembly. t is to be noted that the adhesive layer that is used if need arises is preferably disposed in the shape of a frame extending along the whole peripheral section of the electrolyte membrane and corresponding to the shape of the gasket, upon taking account of securing an adhesiveness.

In the following, respective constituent elements of PEFC other than the fuel cell membrane electrode assembly will be successively described in detail.

(Gasket)

The gasket is disposed to surround the catalyst layer and the gas diffusion layer (or the gas diffusion electrode) and functions to prevent leaking of the supplied gas (fuel gas or oxidizer gas) from the gas diffusion layer.

The material that constitutes the gasket is sufficient if it is impermeable to gas, particularly oxygen or hydrogen, and therefore is not particularly limited. Examples of the constituting material of the gasket include, for example, rubber materials such as fluorine-contained rubber, silicone rubber, ethylene propylene rubber (EPDM), polyisobutylene rubber and the like, and polymer materials such as polyethylene naphthalate (PEN), polyethylene terephthalate (PET), polytetrafluoroethylene (PTFE), polyvinylidene fluoride (PVdF) and the like. It is to be noted that it is a matter of course that other materials may be used.

The size of the gasket is not particularly limited, in which it may be suitably decided taking account of a desired gas sealing ability and the relationship between it and the size of other members.

(Separator)

To constitute a single cell of PEFC (solid polymer type fuel cell), the membrane electrode assembly is sandwiched by the separators. It is general that PEFC has a stack structure in which a plurality of single cells are connected in series with each other. At this time, the separator functions to electrically connect respective MEAs in series with each other, and is provided with flow paths and a manifold for allowing different fluids such as fuel gas, oxidizer gas and coolant to flow and also functions to maintain a mechanical strength of the stack.

The material that constitutes the separator is not particularly limited, in which hitherto known knowledge can be suitably referred to. Examples of the material include, for example, a carbon material such as dense carbon graphite, carbon plate and the like, and a metal material such as stainless steel and the like, and the like. The size of the separator and the shape of the flow paths are not particularly limited, in which they may be suitably determined taking account of the output characteristics of PEFC.

The production method for PEFC is not particularly limited, in which PEFC can be produced by referring to hitherto known knowledge in the field of fuel cell.

Hereinbefore, discussion has been made on the polymer electrolyte type fuel cell as an example, however, an alkali type fuel cell, a direct methanol type fuel cell, a micro fuel cell and the like are given as a fuel cell in addition to the polymer electrolyte type fuel cell, in which the present invention is applicable to any fuel cells. Of these, the polymer electrolyte type fuel cell (PEFC) is preferable because of being possible to be small-sized and to be made highly dense and high in power output.

The above-mentioned fuel cell is useful for a stationary power source in addition to a power source for a movable body such as a vehicle or the like whose mounting space is limited, and suitably used particularly for a vehicle which frequently makes starting/stopping of a system and power output fluctuation, more preferably suitably used for an automotive vehicle.

EMBODIMENT

In the following, steps for producing the hydrophilic porous membrane, the gas diffusion electrode layer and the membrane electrode assembly in the invention will be described as an embodiment. However, the technical range of the invention is not limited to only the following embodiment.

(1) Production method for the hydrophilic porous membrane, the gas diffusion electrode layer and the membrane electrode assembly.

1. Production of Sample-A

As the electrically conductive material for the ink for the hydrophilic porous layer, carbon powder (Ketchen black EC, (produced by Ketchen Black International Co., Ltd.) was prepared. And as the hydrophilic material, an ionomer dispersant liquid (Nafion (registered trade name) D2020, produced by Dupont) was prepared. Then, these materials were so mixed that the carbon powder and the ionomer have a mass ratio (electrically conductive material / hydrophilic material) being 0.7 and as a solvent and a pore former, a propylene glycol solution (50 %) was added to the mixture so as to have a solid content rate of an ink being 12 mass %.

For the catalyst ink for the hydrophilic porous layer, both an electrode catalyst powder (TEC10E50E produced by Tanaka Kikinzoku Kogyo K.K.) and an ionomer dispersant liquid (Nafion (registered trade name) D2020, produced by Dupont) were prepared. Then, these powder and dispersant liquid were mixed so as to have a mass ratio of a carbon carrier and the ionomer being 0.9 and as a solvent and a pore former, a propylene glycol solution (50 %) was added to the mixture so as to have a solid content rate of the ink being 19 %.

First, a hydrophilic porous layer was applied onto a polytetrafluoroethylene (PTFE) base material by a screen printing method so as to have a carbon carried amount of about 0.3 mg· cm2. Thereafter, a heat treatment was made at 130 °C for 30 minutes in order to remove organic matters. With this, a hydrophilic porous membrane of Sample-A was produced. Onto the hydrophilic porous membrane, there was applied a catalyst layer so as to have a Pt carried amount of 0.05 mg·cm2. Thereafter, a heat treatment was again made at 130 °C for 30 minutes to produce a gas diffusion electrode layer of Sample-A.

The gas diffusion electrode layer produced in the above-mentioned way was transfer-printed onto an electrolyte membrane (Nafion (registered trade name) NR211, produced by Dupont) thereby to produce a membrane electrode assembly of Sample-A. The transfer-printing was carried out under the condition of 150 °C, 10 minutes and 0.8 MPa.

2. Production of Sample-B

In place of the carbon powder of Ketchen black EC used for the ink for the hydrophilic porous layer of the above-mentioned Sample-A, a material produced by applying a heat treatment (at 3000°C for 2 hours) to Ketchen black EC was used. With the completely same condition except this, the hydrophilic porous membrane, the gas diffusion electrode layer and the membrane electrode assembly of Sample-B were produced.

3. Production of Sample-C

In place of the carbon powder of Ketchen block EC used for the ink for the hydrophilic porous layer of the above-mentioned Sample-A, acetylene black (SAB produced by Denki Kagaku Kogyo Kabushiki Kaisha) was used. With the completely same condition except this, the hydrophilic porous membrane, the gas diffusion electrode layer and the membrane electrode assembly of Sample-C were produced.

4. Production of Sample-D

In place of the carbon powder of Ketchen black EC used for the ink for the hydrophilic porous layer of the above-mentioned Sample-A, acetylene black (SAB produced by Denki Kagaku Kogyo Kabushiki Kaisha) was used. With the completely same condition except this, the hydrophilic porous membrane, the gas diffusion electrode layer and the membrane electrode assembly of Sample-D were produced.

(2) Evaluation

1. Measurement of pore distribution

The hydrophilic porous layer of Sample-A produced in the above-mentioned method was subjected to measurement of pore distribution through a mercury press-in method. The results are shown in Fig. 8. The pore distribution of the hydrophilic porous layer was measured in a pore diameter range of 3nm to 400nm by using the automatic Porosimeter (Autopore IV 9510 produced by Micrometritics Instrument Corporation).

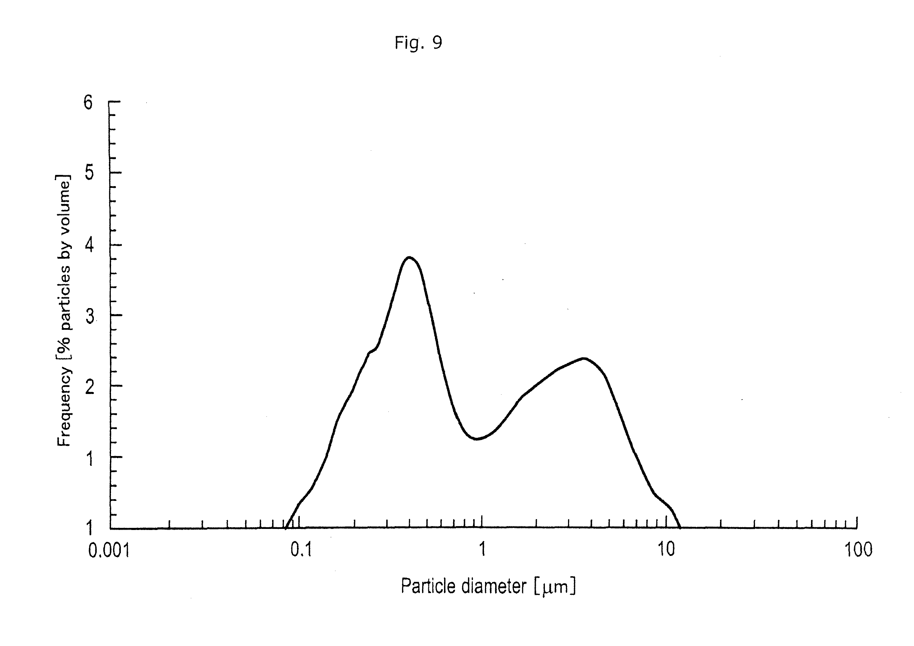

The particle diameter of the secondary particles of the ink for the hydrophilic porous layer and its frequency distribution of the same were measured by using the laser diffraction/scattering type size distribution meter (Microtrac MT3000, produced by NIKKISO CO., LTD). As an environmental solvent, 2-propanol was used and the measurement was so made that a suitable amount of diluted catalyst ink subjected to an ultrasound-dispersion was added to the solvent. The results are shown in Fig. 9.

2. Relationship between relative humidity and fluctuation of electric double layer capacity

In the hydrophilic porous layers of Samples A to D obtained by the above-mentioned method, a relationship between a relative humidity and a fluctuation of an electric double layer capacity, $S_{ion}$, a BET nitrogen specific surface area $S_{BET}$ and a covering ratio $\theta_{ion}$ of the hydrophilic material were obtained.

First, the hydrophilic porous layer containing no catalyst component and the catalyst layer were respectively disposed at the different surfaces of an electrolyte membrane thereby producing the membrane electrode assembly. The assembly were interposed at its opposite surfaces between a pair of gas diffusion layers, further between carbon separators, and further between gold-plated collector plates thereby obtaining a cell similar to a usual fuel cell. In a condition wherein humidity-controlled hydrogen gas was supplied to the catalyst layer while humidity-controlled nitrogen gas was supplied to the hydrophilic porous layer, the electric potential of the hydrophilic porous layer was scanned 5 to 10 times within a range of 0.2 to 0.6 V relative to a reference electrode using the catalyst layers respectively as the reference electrode and an opposite electrode. These scans were made at a scanning speed of 50 mV/s. An obtained relationship between electric current and electric potential indicated a waveform similar to rectangle. This represented that oxidation and reduction reactions did not occur on the electrode, and charging and discharging of the electric double layer was a main factor of electric current. In this waveform, the electric double layer capacity was calculated by dividing an average value of absolute values of oxidation current and reduction current at a certain electric potential such as 0.3 V by a scanning speed. This measurement was made under a variety of humidity conditions, thereby obtaining the relationship between the electric double layer capacity and the relative humidity.

The relationship between the relative humidity and the fluctuation of the electric double layer capacity is shown in Fig. 6, and $S_{ion}$, the BET nitrogen specific surface area $S_{BET}$ of the electrically conductive material and the covering ratio $\theta_{ion}$ of the hydrophilic material are shown in Table 2.

[Table 2]

| Carbon material | A | B | C | D |
|---|---|---|---|---|
| $S_{BET}$/m$^2$g$^{-1}$carbon | 718 | 151 | 715 | 346 |
| $\theta_{ion}$/- | 0.34 | 1.00 | 0.27 | 0.83 |
| $S_{ion}$/m$^2$g$^{-1}$carbon | 247 | 151 | 192 | 287 |

3. Water transportability (Inverse of transport resistance)

First, the relationship between activity of water and amount of contained water was measured by using BELSORP18 PLUS-HT (produced by BEL JAPAN, INC.). Based on the relationship between the measured relationship, the amount of contained water and a diffusion coefficient of water (see Journal of The Electrochemical Society, 147 (9) 3171-3177 (2000)), the relationship between the activity of water and the transport resistance was obtained.

4. Observation of carbon (KB) powder

In order to confirm the primary particle diameter, carbon (KB) powder was observed by using HD-2000 (scanning electron microscope produced by Hitachi, Ltd.). The results are shown in Fig. 10.

5. Observation of the gas diffusion layer

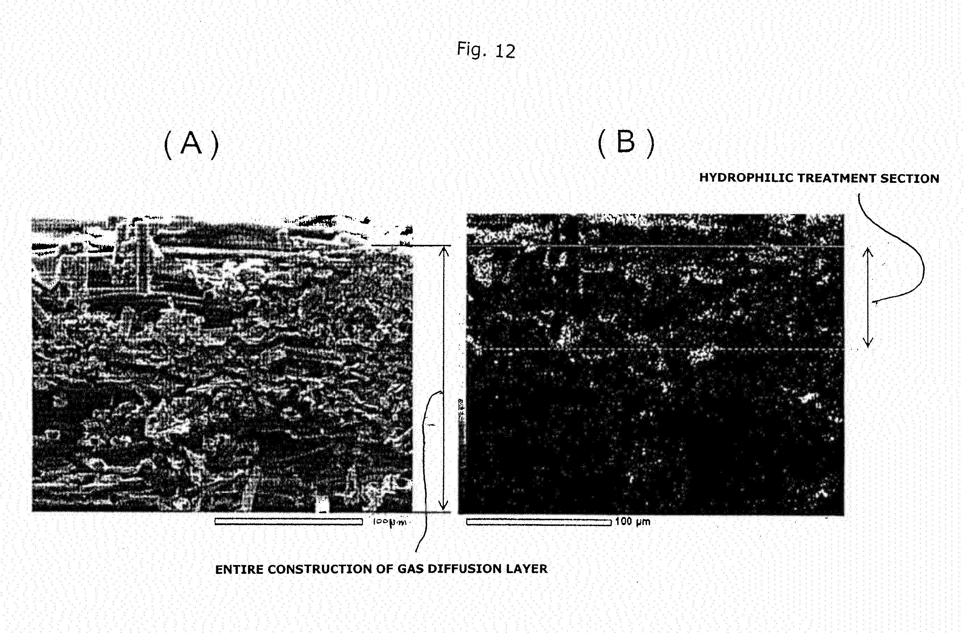

In order to confirm sites exhibiting a hydrophilicity and confirm fluorine atoms of ionomers, the gas diffusion layer of the embodiment was observed by using a SEM (Scanning electron microscope produced by JEOL, Ltd., JSM-6380LA) and analyzed by an EPMA (Electron probe micro-analyzer). The results are shown in Fig. 12. (A) indicates the observation result by the SEM, and (B) indicates the observation result of the EPMA. According to the EPMA, whity parts scattered on an upper portion of the photograph were hydrophilic treatment sections in which fluorine atoms were dispersed.

6. Sub-zero temperature electricity generation test

A membrane electrode assembly using the gas diffusion layer prepared by providing a hydrophilic treatment section to a gas diffusion layer base material H-060 produced by Toray Industries, Inc. as an anode (fuel electrode) and using GDL24BC produced by SGL Carbon Japan Co., Ltd. as a cathode (air electrode) was assembled in a small-size single cell, thereby confirming a sub-zero electricity generation performance. Specifically, first, nitrogen gas having a relative humidity of 60 % was supplied to the both electrodes at 50 °C for 3 hours for the purpose of conditioning. Subsequently, the temperature of the small-size single cell was cooled to -20 °C over about 1 hour. After the temperature was sufficiently stable, dried hydrogen (1.0 NL/min) and dried air (1.0 NL/min) were initiated to be supplied to the respective electrodes. After lapse of 90 seconds, a load (current density: 40 mA/cm$^2$) was picked up in a moment. Produced water was frozen to lower a cell voltage because of being under a sub-zero temperature circumstance, upon which it was supposed that a gas phase drainage of produced water was higher as a time at which such a condition was reached was longer. Accordingly, comparison was made on a time of from the initiation of electricity generation to a cell voltage of 0.2 V being reached. Results are shown in Table 3.

[Table 3]

| | Comparative Example | Embodiment |
|---|---|---|
| Electricity generation time | 212 seconds | 222 seconds |

As shown in Table 3, the time of from the initiation of electricity generation to the cell voltage of 0.2 V being reached was 222 seconds in case of the cell of the embodiment, relative to 212 seconds in case of the cell using the above-mentioned gas diffusion layer to which the hydrophilic treatment of the present invention had not undergone, as the anode. In other words, the cell of the embodiment was prolonged by 10 seconds or more in electricity generation capable time as compared with the cell to which no hydrophilic treatment had been made. Accordingly, according to the present invention, produced water can be effectively drained out from the membrane electrode assembly during a sub-zero temperature starting, and thus it is possible to suppress a voltage drop of the cell for a further long time.

EXPLANATION OF REFERENCE NUMERALS

| | |
|---|---|
| 1 | membrane electrode assembly |
| 2 | cathode side separator |
| 3, 4 | gas supply groove |
| 5 | cathode side electrode catalyst layer |
| 6 | cathode side gas diffusion layer |
| 7 | anode side separator |
| 8 | solid polymer electrolyte membrane |
| 9 | anode side gas diffusion layer |
| 10 | hydrophilic porous layer |
| 11 | polymer electrolyte membrane |
| 12a | anode catalyst layer |
| 12c | cathode catalyst layer |
| 13a | anode gas diffusion layer |
| 13c | cathode gas diffusion layer |
| 14a | anode micropore layer |
| 14c | cathode micropore layer |
| 15a | anode macropore layer |
| 15c | cathode macropore layer |
| 16a | anode gas diffusion electrode |
| 16c | cathode gas diffusion electrode |
| 17 | cathode gas flow path |
| 18 | anode gas flow path |
| 19 | anode side electrode catalyst layer |
| 20 | hydrophilic material-electrically conductive material aggregate |
| 21, 41 | hydrophilic material |
| 22 | transport path that is a continuous path for water (continuous transport path of water) |
| 23 | water vapor transport path |
| 24 | routes from liquid water to water vapor |
| 25, 45 | electrically conductive material |
| 46 | BET nitrogen specific surface area ($S_{BET}$) of electrically conductive material |
| 47 | covering surface (Sion) of hydrophilic material |
| 48 | inside outer surface of hydrophilic material |
| 49 | fine bores |
| 100 | solid polymer electrolyte type fuel cell |
| 100' | membrane electrode assembly |
| 101 | anode (electrode) catalyst layer |
| 102 | cathode (electrode) catalyst layer |

**Claims**

1. A hydrophilic porous layer comprising electrically conductive material - hydrophilic material aggregates each including hydrophilic materials and electrically conductive materials that intimately contact to one another, the hydrophilic materials being mutually connected to one another to form in the plurality of hydrophilic materials a continuous transport path for water, the electrically conductive material - hydrophilic material aggregates forming therebetween a transport path for water vapor,

which is **characterized in that** a water transport resistance Rwater of the water transport path is larger than a water vapor transport resistance Rgas of the water vapor transport path.

2. A hydrophilic porous layer as claimed in Claim 1, which is further **characterized in that** the hydraulic material covers at least one part of an outer surface of the electrically conductive material and a covering area Sion of the hydrophilic material that covers the at least one part of the outer surface of the electrically conductive material satisfies the following equation:

[Eq.1]

$$J_{gas} = -D_{gas}^{eff} \frac{dc}{dx} = -D_{gas}^{eff} \frac{P_{sat}}{RT} \cdot \frac{da}{dx}$$

$$-D_{gas}^{eff} \frac{P_{sat}}{RT} = \frac{1}{R_{gas}}$$

wherein:

c: concentration of water vapor
a: activity of water
x: transportation distance
R: gas constant
T: temperature
$J_{gas}$: water vapor flux
$P_{sat}$: saturated vapor pressure

and **in that** the covering area $S_{ion}$ of the hydrophilic material is not smaller than 200m$^2$/g per unit mass of the electrically conductive material.

3. A hydrophilic porous layer as claimed in Claim 2, which is **characterized in that** a covering ratio $\theta_{ion}$ of the hydrophilic material is lower than 0.7.

4. A hydrophilic porous layer as claimed in either one of Claims 1 to 3, which is **characterized in that** the electrically conductive material is a material that has been subjected to an acid treatment.

5. A hydrophilic porous layer as claimed in either one of Claims 1 to 4, which is **characterized in that** the mean particle diameter of primary particles of the electrically conductive material is not larger than 60nm.

6. A hydrophilic porous layer as claimed in either one of Claims 1 to 5, which is **characterized in that** the covering ratio $\theta_{ion}$ of the hydrophilic material is within a range of $\pm$20% of the maximum value of the covering ratio $\theta_{ion}$ of the hydrophilic material.

7. A gas diffusion electrode **characterized by** comprising:

a catalyst layer including an electrically conductive material - hydrophilic material aggregate with a catalyst component contained therein, the aggregate including hydrophilic materials and catalyst component carrying electrically conductive materials that intimately contact to one another, the plurality of hydrophilic materials being mutually connected to one another to form in the hydrophilic materials a continuous transport for water; and
a hydrophilic porous layer as claimed in either one of Claims 1 to 6,
wherein the catalyst layer and the hydrophilic porous layer are in intimate contact with each other.

8. A hydrophilic porous layer as claimed in either one of Claims 1 to 6, which is **characterized by** being produced by using an ink that includes an electrically conductive material, a hydrophilic material and a solvent and contains therein secondary particles of which mean diameter is not smaller than 0.5 $\mu$m and of which mode diameter is not smaller than 0.35 $\mu$m.

9. A hydrophilic porous layer as claimed in either one of Claims 1 to 6, which is **characterized in that** the ink contains therein a pore former.

10. A gas diffusion electrode as claimed in Claim 7, in which:

   a gas diffusion layer is formed which comprises the hydrophilic porous layer including the hydrophilic material and the electrically conductive material covered with the hydrophilic material and a porous gas diffusion layer base material,
   at least part of the hydrophilic porous layer is set in the gas diffusion layer base material, and
   at least part of the gas diffusion layer base material is a hydrophilic treatment section that has been subjected to a hydrophilic treatment.

11. A gas diffusion electrode as claimed in Claim 10, in which at least part of the hydrophilic porous layer is formed in the gas diffusion layer.

12. A gas diffusion electrode as claimed in Claim 10 or 11, in which an effective diffusion coefficient D (m$^2$/s) of water vapor in the gas diffusion layer base material satisfies the following equation at 1 atm and at -20 °C:

$$[Eq.\ 1]$$
$$D \geq 2.0 \times 10^{-5} \times \varepsilon^{\gamma}$$

wherein $\varepsilon$ is a porosity of the gas diffusion layer base material; and $\gamma$ is an inflection degree of the gas diffusion layer base material.

13. A gas diffusion electrode as claimed in either one of Claims 10 to 12, in which minimum pore diameter of pores in the gas diffusion layer base material is not smaller than 1 $\mu$m.

14. A gas diffusion electrode as claimed in any one of Claims 10 to 13, in which the hydrophilic treatment section includes at least one selected from the group consisting of an ion conductive material, a metal oxide and a hydrophilic polymer.

15. A gas diffusion electrode as claimed in either one of Claims 10 to 14, further comprising a gas diffusion layer, and a catalyst layer containing a hydrophilic material and an electrically conductive carrier carrying a catalyst component, the catalyst layer having a structure for forming a continuous transport path for liquid water under intimate contact between the hydrophilic material and the other hydrophilic material with each other.

16. A gas diffusion electrode as claimed in Claim 15, in which EW of the hydrophilic material is not larger than 1000 g/eq..

17. A method of producing the gas diffusion electrode as claimed in either one of Claims 7, 10 to 16, which is **characterized by** applying an ink (1) for the hydrophilic porous layer that contains an electrically conducive material, a hydrophilic material and a solvent and then applying an ink (2) for the hydrophilic porous layer that includes an electrically conductive material carrying a catalyst component, a hydrophilic material and a solvent.

18. A method of producing the gas diffusion electrode as claimed in either one of Claims 7, 10 to 16, which comprises a step of applying a solution containing a hydrophilic agent onto a surface of a gas diffusion layer base material and a step of further applying an ink for a hydrophilic porous layer containing an electrically conductive material, a hydrophilic material and a solvent before the solution is dried, and then making a drying.

19. A membrane electrode assembly comprising the hydrophilic porous layer as claimed in either one of Claims 1 to 6 and Claims 8 and 9.

20. A membrane electrode assembly comprising the gas diffusion electrode as claimed in either one of Claims 7 and 10 to 16.

21. A fuel cell comprising the membrane electrode assembly as claimed in Claim 19 or 20.

22. A vehicle on which the fuel cell as claimed in Claim 21 is mounted.

Fig. 1

Fig. 2

Fig. 3

Fig. 4

Fig. 5A

θion is lowered

θion is equal

SMALL

LARGE

MASS RATIO BETWEEN HYDROPHILIC MATERIAL AND ELECTRICALLY CONDUTIVE MATERIAL

Fig. 5B

WITHIN 20%

MASS RATIO BETWEEN HYDROPHILIC MATERIAL AND ELECTRICALLY CONDUTIVE MATERIAL

Fig. 5C

Fig. 6

Fig. 7

EP 2 448 047 A1

Fig. 8

Fig. 9

EP 2 448 047 A1

Fig. 10

HD-2000 200kV x400k SE                    80.0nm

100        Fig. 11

Fig. 12

(A) ENTIRE CONSTRUCTION OF GAS DIFFUSION LAYER

(B) HYDROPHILIC TREATMENT SECTION

| INTERNATIONAL SEARCH REPORT | International application No. |
| --- | --- |
| | PCT/JP2010/060825 |

**A. CLASSIFICATION OF SUBJECT MATTER**
*H01M4/86*(2006.01)i, *H01M8/00*(2006.01)i, *H01M8/02*(2006.01)i, *H01M8/10* (2006.01)i

According to International Patent Classification (IPC) or to both national classification and IPC

**B. FIELDS SEARCHED**

Minimum documentation searched (classification system followed by classification symbols)
H01M4/86, H01M8/00, H01M8/02, H01M8/10

Documentation searched other than minimum documentation to the extent that such documents are included in the fields searched
Jitsuyo Shinan Koho 1922-1996 Jitsuyo Shinan Toroku Koho 1996-2010
Kokai Jitsuyo Shinan Koho 1971-2010 Toroku Jitsuyo Shinan Koho 1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2008-27775 A (Toyota Motor Corp.), 07 February 2008 (07.02.2008), paragraphs [0018], [0021] to [0025]; fig. 1 & US 2009/0325022 A1 paragraphs [0019], [0031] to [0035]; fig. 1 & WO 2008/010613 A1 | 1-22 |
| X | JP 2006-318757 A (GS Yuasa Corp.), 24 November 2006 (24.11.2006), paragraphs [0028] to [0030], [0049] to [0052], [0063] to [0069]; fig. 2 (Family: none) | 1-22 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 21 September, 2010 (21.09.10) | 05 October, 2010 (05.10.10) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2010/060825 |

C (Continuation). DOCUMENTS CONSIDERED TO BE RELEVANT

| Category* | Citation of document, with indication, where appropriate, of the relevant passages | Relevant to claim No. |
| --- | --- | --- |
| X | JP 2004-296435 A (Toray Industries, Inc.), 21 October 2004 (21.10.2004), paragraphs [0028] to [0030], [0060] to [0062], [0065]; fig. 1 (Family: none) | 1-22 |
| X | JP 10-241701 A (Japan Storage Battery Co., Ltd.), 11 September 1998 (11.09.1998), paragraphs [0027], [0031] to [0039]; fig. 4 & US 2002/0004159 A1 paragraphs [0037], [0041] to [0051]; fig. 4 & EP 949703 A1 & WO 98/029916 A1 | 1-22 |
| X | JP 8-180879 A (Toyota Motor Corp.), 12 July 1996 (12.07.1996), paragraphs [0015] to [0018], [0030]; fig. 2 (Family: none) | 1-22 |
| X | JP 7-176310 A (Sanyo Electric Co., Ltd.), 14 July 1995 (14.07.1995), paragraphs [0005] to [0010]; fig. 1 (Family: none) | 1-22 |
| X | JP 6-203852 A (Sanyo Electric Co., Ltd.), 22 July 1994 (22.07.1994), paragraphs [0005] to [0010]; fig. 1 (Family: none) | 1-22 |

Form PCT/ISA/210 (continuation of second sheet) (July 2009)

## INTERNATIONAL SEARCH REPORT

| International application No. |
|---|
| PCT/JP2010/060825 |

**Box No. II**  **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**  **Observations where unity of invention is lacking (Continuation of item 3 of first sheet)**

This International Searching Authority found multiple inventions in this international application, as follows:

    Refer to "extra sheet".

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| **INTERNATIONAL SEARCH REPORT** | International application No. |
|---|---|
| | PCT/JP2010/060825 |

Continuation of Box No.III of continuation of first sheet(2)

In order that a group of inventions set forth in claims comply with the requirement of unity, it is required that a special technical feature for so linking the group of inventions as to form a single general inventive concept is present. But, the inventions set forth in claims 1 - 22 are considered to be linked to one another by only the matter set forth in claim 1.

However, it is obvious that the above-said matter cannot be a special technical feature, since said matter is described in the prior art documents, for example, JP 2008-27775 A (Toyota Motor Corp.), 7 February 2008 (07.02.2008), [0018], [0021] - [0025], [fig. 1], JP 10-241701 A (Japan Storage Battery Co., Ltd.), 11 September 1998 (11.09.1998), [0027], [0031] - [0039], [fig. 4], etc.

Consequently, among the group of inventions set forth in claims 1 - 22, there is no special technical feature for so linking the inventions as to form a single general inventive concept, and therefore, said group of inventions set forth in claims 1 - 22 does not comply with the requirement of unity of invention.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 3778506 B

**Non-patent literature cited in the description**

• *Journal of The Electrochemical Society,* 2000, vol. 147 (9), 3171-3177